(19) Europäisches Patentamt
European Patent Office
Office européen des brevets

(11) **EP 4 325 230 A1**

(12) **EUROPEAN PATENT APPLICATION**
published in accordance with Art. 153(4) EPC

(43) Date of publication:
**21.02.2024 Bulletin 2024/08**

(21) Application number: **22848577.7**

(22) Date of filing: **27.07.2022**

(51) International Patent Classification (IPC):
**G01R 31/3185** (2006.01)     **G01R 31/28** (2006.01)

(52) Cooperative Patent Classification (CPC):
**G01R 31/28; G01R 31/3185**

(86) International application number:
**PCT/CN2022/108248**

(87) International publication number:
**WO 2023/005972 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2021   CN 202110855588
28.07.2021   CN 202110855366
28.07.2021   CN 202110855269
29.09.2021   CN 202111149538**

(71) Applicant: **Origin Quantum Computing
Technology
(Hefei) Co., Ltd
Hefei, Anhui 230088 (CN)**

(72) Inventors:
• **SHI, Hanqing
Hefei, Anhui 230088 (CN)**
• **KONG, Weicheng
Hefei, Anhui 230088 (CN)**

(74) Representative: **Hoefer & Partner Patentanwälte
mbB
Pilgersheimer Straße 20
81543 München (DE)**

(54) **METHOD FOR DETERMINING CROSSTALK OF QUANTUM BITS, QUANTUM MEASUREMENT AND CONTROL SYSTEM, AND QUANTUM COMPUTER**

(57)     The present disclosure belongs to the field of quantum computing, and specifically discloses a method for determining crosstalk of qubits, a quantum control system, and a quantum computer. The method includes: performing a Ramsey experiment on a first qubit, where, between two X/2 quantum logic gates in the Ramsey experiment, first and second electrical signals are applied to first and second qubits, adjusting an amplitude of the second electrical signal for multiple times so that the second qubit causes a crosstalk effect on the first qubit, and acquiring a crosstalk coefficient of the second qubit to the first qubit by linearly fitting a relationship between an amplitude of the first electrical signal affected by crosstalk and the corresponding amplitude of the second electrical signal. According to the present disclosure, crosstalk of qubits can be quickly and accurately acquired.

Perform a Ramsey experiment on a first qubit, where between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit — S102

Acquire a target operating frequency of the first qubit based on the Ramsey experiment, and determine a voltage of the first electrical signal corresponding to the target operating frequency as a third voltage — S104

Determine a crosstalk coefficient of the second qubit to the first qubit based on the second voltage and the third voltage — S106

FIG. 2

## Description

This application claims priority to Chinese Patent Application No. 202110855588.9, entitled "METHOD FOR ACQUIRING AC CROSSTALK COEFFICIENT BETWEEN QUBITS" and filed with the China Patent Office on July 28, 2021, Chinese Patent Application No. 202110855366.7, entitled "METHOD FOR ACQUIRING DC CROSSTALK COEFFICIENT AND DC CROSSTALK MATRIX BETWEEN QUBITS" and filed with the China Patent Office on July 28, 2021, Chinese Patent Application No. 202111149538.5, entitled " METHOD AND APPARATUS FOR ACQUIRING AC MODULATION SPECTRUM, AND QUANTUM COMPUTER" and filed with the China Patent Office on September 29, 2021, and Chinese Patent Application No. 202110855269.8, entitled "METHOD FOR ACQUIRING DC CROSSTALK COEFFICIENT AND DC CROSSTALK MATRIX BETWEEN QUBITS" and filed with the China Patent Office on July 28, 2021, the entire contents of which are incorporated herein by reference.

## TECHNICAL FIELD

The present disclosure belongs to the field of quantum computing, in particular a method for determining crosstalk of qubits, a quantum control system, and a quantum computer.

## BACKGROUND

In the related art, as a chip, a quantum chip is a basic component unit of a quantum computer, and is a processor based on a superposition effect of quantum states and using qubits as a carrier of information processing. A plurality of qubits are integrated on the quantum chip. In order to achieve more complex quantum computing, the number of qubits on the quantum chip is rapidly increasing.

When there are two or more qubits on the quantum chip, magnetic flux crosstalk easily occurs between the qubits (that is, a magnetic flux modulation signal applied to one qubit causes interference to another qubit), thereby increasing uncertainty of control over the qubits and affecting accuracy of the control over the qubits. Therefore, there is a need to measure and analyze crosstalk between qubits on a superconducting quantum chip.

## SUMMARY

An objective of the present disclosure is to provide a method for determining crosstalk of qubits, a quantum control system, and a quantum computer, so as to solve the deficiencies in the related art, provide a reliable basis for control over qubits, and reduce uncertainty of the control over the qubits.

A technical solution adopted in some embodiments in a first aspect of the present disclosure is as follows.

A method for determining crosstalk of qubits, including:

performing a Ramsey experiment on a first qubit, wherein, between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit;

acquiring a target operating frequency of the first qubit based on the Ramsey experiment, and determining a voltage of the first electrical signal corresponding to the target operating frequency as a third voltage; and

determining a crosstalk coefficient of the second qubit to the first qubit based on the second voltage and the third voltage.

According to some embodiments of the present disclosure, the first electrical signal is a first alternating current (AC) signal, and the second electrical signal is a second AC signal,

the acquiring a target operating frequency of the first qubit based on the Ramsey experiment, and determining a voltage of the first electrical signal corresponding to the target operating frequency as a third voltage includes:

acquiring the target operating frequency of the first qubit based on the Ramsey experiment, and acquiring the voltage corresponding to the target operating frequency as the third voltage based on a pre-acquired AC modulation spectrum of the first qubit, and

the determining a crosstalk coefficient of the second qubit to the first qubit based on the second voltage and the third voltage includes:

determining an AC crosstalk coefficient of the second qubit to the first qubit based on the second voltage and the third voltage.

According to some embodiments of the present disclosure, both the first AC signal and the second AC signal are square-wave signals, and pulse widths of the first AC signal and the second AC signal are equal.

According to some embodiments of the present disclosure, the applying a first electrical signal with an amplitude of a first voltage to the first qubit so that the first qubit is at a magnetic flux modulation sensitive point includes:

> determining a degenerate operating point of the first qubit according to the AC modulation spectrum;
> determining, according to the degenerate operating point and a preset frequency deviation, a magnetic flux modulation sensitive point associated with the degenerate operating point; and
> determining the first voltage according to the magnetic flux modulation sensitive point, and setting amplitude of the first AC signal to the first voltage.

According to some embodiments of the present disclosure, the determining a crosstalk coefficient of the second qubit to the first qubit based on the second voltage and the third voltage includes:

> acquiring a set of first data, the first data including the first voltage, the second voltage, and the third voltage;
> determining whether a number of sets of the first data satisfies a preset condition;
> if yes, linearly fitting a relationship between the second voltage and the third voltage based on all of the first data to determine the AC crosstalk coefficient of the second qubit to the first qubit; and
> if not, resetting the magnitude of the second voltage, and going back to perform the step of performing a Ramsey experiment on the first qubit.

According to some embodiments of the present disclosure, the preset condition includes presetting a number of times of performing of the Ramsey experiment.

According to some embodiments of the present disclosure, the linearly fitting a relationship between the second voltage and the third voltage based on all of the first data, to determine the AC crosstalk coefficient of the second qubit to the first qubit includes:

> calculating, for each set of the first data, a variation of the third voltage relative to the first voltage, and acquiring a coefficient of a linear relationship between the variation and the second voltage; and
> acquiring an average value of all the coefficients, and taking the average value of the coefficients as the AC crosstalk coefficient of the second qubit to the first qubit.

According to some embodiments of the present disclosure, the resetting the magnitude of the second voltage includes:

increasing or decreasing the second voltage within a preset range according to a preset step size.

According to some embodiments of the present disclosure, the first electrical signal is a first direct current (DC) signal, and the second electrical signal is a second DC signal,

> the acquiring a target operating frequency of the first qubit based on the Ramsey experiment, and determining a voltage of the first electrical signal corresponding to the target operating frequency as a third voltage includes:
> acquiring the target operating frequency of the first qubit based on the Ramsey experiment, and obtaining the voltage corresponding to the target operating frequency based on an energy spectrum curve of the first qubit as the third voltage, wherein the energy spectrum curve is a variation curve of frequencies of the qubit with voltages, and
> the determining a crosstalk coefficient of the second qubit to the first qubit based on the second voltage and the third voltage includes:
> determining a DC crosstalk coefficient of the second qubit to the first qubit based on the second voltage and the third voltage.

According to some embodiments of the present disclosure, the applying a first electrical signal with an amplitude of a first voltage to the first qubit so that the first qubit is at a magnetic flux modulation sensitive point specifically includes:

> determining a first operating point of the first qubit, wherein the first operating point is an operating point near the magnetic flux modulation sensitive point of the first qubit; and
> determining a voltage corresponding to the first operating point as the first voltage and applying the first voltage to the first qubit, and adjusting the first voltage so that a frequency of the first qubit is equal to a first frequency corresponding to the magnetic flux modulation sensitive point.

According to some embodiments of the present disclosure, the determining a first operating point of the first qubit specifically includes:

determining a degenerate operating point of the first qubit according to the energy spectrum curve of the first qubit;
determining the magnetic flux modulation sensitive point according to the degenerate operating point and a preset frequency deviation; and
determining the first operating point according to the magnetic flux modulation sensitive point.

According to some embodiments of the present disclosure, the energy spectrum curve is an energy spectrum curve after the frequency of the first qubit is affected by the second voltage.

According to some embodiments of the present disclosure, prior to the determining a DC crosstalk coefficient of the second qubit to the first qubit based on the second voltage and the third voltage, the method further includes:

adjusting the second voltage; and
going back to perform the step of acquiring the target operating frequency of the first qubit based on the Ramsey experiment, and obtaining the voltage corresponding to the target operating frequency based on an energy spectrum curve of the first qubit as the third voltage.

According to some embodiments of the present disclosure, prior to the determining a DC crosstalk coefficient of the second qubit to the first qubit based on the second voltage and the third voltage, the method further includes:

determining the second voltage and the third voltage as a set of to-be-processed data, and updating a to-be-processed database;
determining a data volume threshold of the to-be-processed data as Z, determining a total number of the to-be-processed data currently in the to-be-processed data database as M, and determining whether M is greater than or equal to Z;
if yes, performing the step of determining a DC crosstalk coefficient of the second qubit to the first qubit based on the second voltage and the third voltage; and
if not, going back to perform the step of adjusting the second voltage.

According to some embodiments of the present disclosure, the determining a DC crosstalk coefficient of the second qubit to the first qubit based on the second voltage and the third voltage specifically includes:

linearly fitting the second voltage and the corresponding third voltage according to the M sets of to-be-processed data; and
obtaining a slope of a linear relationship between the second voltage and the third voltage, and denoting the slope as the DC crosstalk coefficient of the second qubit to the first qubit.

In some embodiments in a second aspect of the present disclosure, an apparatus for determining crosstalk of qubits is provided, including:

an experimental module configured to perform a Ramsey experiment on a first qubit, wherein, between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit;
an operating frequency acquisition module configured to acquire a target operating frequency of the first qubit based on the Ramsey experiment, and determine a voltage of the first electrical signal corresponding to the target operating frequency as a third voltage; and
a crosstalk determination module configured to determine a crosstalk coefficient of the second qubit to the first qubit based on the second voltage and the third voltage.

In some embodiments in a third aspect of the present disclosure, a quantum control system is provided, including the apparatus for determining crosstalk of qubits described in the above feature descriptions.
In some embodiments in a fourth aspect of the present disclosure, a quantum computer is provided, including the above quantum control system.
In some embodiments in a fifth aspect of the present disclosure, a computer-readable storage medium is provided, storing a computer program, wherein, when the computer program is executed by a processor, the method for determining crosstalk of qubits according to any one of the feature descriptions in some embodiments in the first aspect can be implemented.

Compared with the related art, a first qubit and a second qubit are selected for measurement in the present disclosure, a Ramsey experiment is performed on the first qubit, a first electrical signal and a second electrical signal are respectively applied to the first qubit and the second qubit between two X/2 gates of the Ramsey experiment, an amplitude of the first electrical signal is a first voltage so that the first qubit is at a magnetic flux modulation sensitive point, an amplitude of the second electrical signal is a second voltage so that the second qubit causes a crosstalk effect on the first qubit, a third voltage of the amplitude of the first electrical signal affected by the crosstalk is acquired based on a target operating frequency of the first qubit, a relationship between the obtained third voltage and the corresponding second voltage is linearly fit by updating the amplitude of the second electrical signal for several times,, and a crosstalk coefficient of the second qubit to the first qubit is determined. In this way, it is convenient to perform an appropriate compensation operation according to the crosstalk coefficient during the frequency adjustment of the qubit, so that the frequency of the qubit adjusted by a magnetic flux control signal reaches an expected value.

## BRIEF DESCRIPTION OF DRAWINGS

In order to more clearly illustrate the technical solutions in some embodiments of the present disclosure or the related art, the accompanying drawings used in the description of the embodiments or the related art will be briefly introduced below. It is apparent that, the accompanying drawings in the following description are only some embodiments of the present disclosure, and other drawings can be obtained by those of ordinary skill in the art from the provided drawings without creative efforts.

FIG. 1 is a diagram of a superconducting quantum chip according to some embodiments of the present disclosure;
FIG. 2 is a flowchart of a method for determining crosstalk of qubits according to some embodiments of the present disclosure;
FIG. 3 is a timing diagram of an experiment for testing a crosstalk on a first qubit and a second qubit according to some embodiments of the present disclosure;
FIG. 4 is a curve of an AC modulation spectrum of the first qubit in the superconducting quantum chip according to some embodiments of the present disclosure;
FIG. 5 is a flowchart of a method for acquiring an AC modulation spectrum according to some embodiments of the present disclosure;
FIG. 6 is a flowchart of a method for acquiring an AC crosstalk matrix of a superconducting quantum chip according to some embodiments of the present disclosure;
FIG. 7 is a flowchart of a method for acquiring a DC crosstalk coefficient between qubits according to some embodiments of the present disclosure;
FIG. 8 is a curve of a qubit energy spectrum according to some embodiments of the present disclosure;
FIG. 9 is a flowchart of applying a first electrical signal with an amplitude of a first voltage to the first qubit so that the first qubit is at a magnetic flux modulation sensitive point according to some embodiments of the present disclosure;
FIG. 10 is a flowchart of determining a first operating point of the first qubit according to some embodiments of the present disclosure;
FIG. 11 is a flowchart of re-acquiring data of the second voltage and the third voltage according to some embodiments of the present disclosure;
FIG. 12 is a flowchart of acquiring a DC crosstalk coefficient of an interfering qubit to a target qubit based on data of the second voltage and the third voltage according to some embodiments of the present disclosure;
FIG. 13 is a schematic diagram of linear fitting according to some embodiments of the present disclosure;
FIG. 14 is a schematic flowchart of a method for acquiring a DC crosstalk matrix between qubits according to some embodiments of the present disclosure;
FIG. 15 is a flowchart of another method for acquiring a DC crosstalk coefficient between qubits according to some embodiments of the present disclosure;
FIG. 16 is a flowchart of another method for acquiring a DC crosstalk matrix between qubits according to some embodiments of the present disclosure; and
FIG. 17 is a schematic diagram of an apparatus for determining crosstalk of qubits according to some embodiments of the present disclosure.

## DESCRIPTION OF EMBODIMENTS

Some embodiments described below with reference to the accompanying drawings are exemplary, which are only used to explain the present disclosure and cannot be construed as limiting the present disclosure.

Physical systems that realize quantum computing include superconducting quantum computing, semiconductor quantum computing, ion trap quantum computing, and the like. The core of the superconducting quantum computing is a superconducting quantum chip. The superconducting quantum chip is provided with several qubits. When the qubits in the superconducting quantum chip are modulated, a magnetic flux modulation signal is transmitted to a qubit using a Z control line corresponding to the qubit, so as to adjust an operating frequency of the qubit. The magnetic flux modulation signal transmitted by the Z control line includes a DC flux signal (hereinafter referred to as "DC signal") and an AC flux signal (hereinafter referred to as "AC signal"). The DC signal is used to adjust a frequency of the qubit to an idle frequency position to prepare an initial state of the qubit. The AC signal is used to quickly and accurately adjust the frequency of the qubit from the idle frequency position to a specific position for characterization.

When a certain qubit on the superconducting quantum chip is adjusted, not only the frequency of the adjusted qubit is affected, but also frequencies of other qubits are affected due to a crosstalk phenomenon. For example, when an AC signal is applied to an AC signal line of a certain qubit in the superconducting quantum chip, in addition to the effect on a frequency of the qubit, frequencies of nearby qubits may be changed. This phenomenon is called AC crosstalk. If the effect is ignored, when quantum computing is performed using the superconducting quantum chip, the obtained final result may have serious errors, or may be wrong.

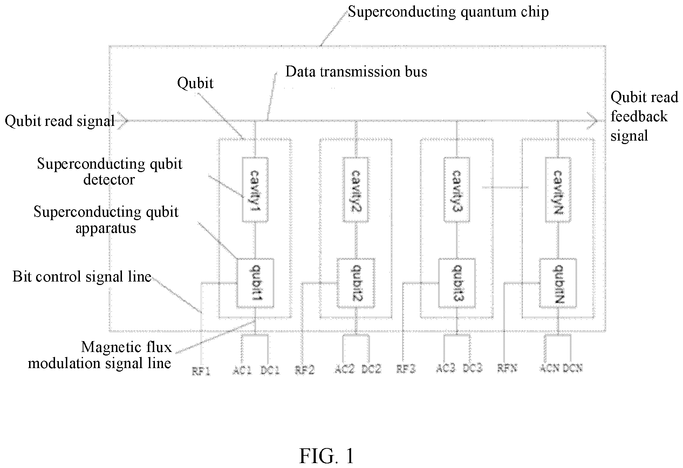

Referring to FIG. 1, FIG. 1 is a diagram of components of a superconducting quantum chip according to some embodiments of the present disclosure. The superconducting quantum chip includes a plurality of qubits, and crosstalk may exist between any two of these qubits. Each of the qubits includes a superconducting qubit detector and a superconducting qubit apparatus coupled with each other. One end of the superconducting qubit detector away from the corresponding superconducting qubit apparatus is connected to a data transmission bus integrated on the superconducting quantum chip. The data transmission bus is configured to receive a qubit read signal and transmit a qubit read feedback signal. Each superconducting qubit apparatus of the superconducting quantum chip is connected to a magnetic flux modulation signal line (Z control line) and a bit control signal line. The magnetic flux modulation signal line provides a magnetic flux modulation signal for controlling a change in the operating frequency of the qubit. The bit control signal line provides a driving control signal for the qubit to control a change in a quantum state of the qubit.

A DC signal and an AC signal of the magnetic flux modulation signal may adjust the frequency of the qubit with reference to the following formula (1):

$$f(V) = A\sqrt{\sqrt{1 + d^2 \tan^2\left[\pi\left(\frac{V_{flux}}{a} + b\right)\right]}\left|\cos\left[\pi\left(\frac{V_{flux}}{a} + b\right)\right]\right|} + B \qquad (1)$$

where $V_{flux}$ denotes a voltage value of the magnetic flux modulation signal; f(V) denotes the frequency of the qubit; and A, B, a, b, and d are all constants.

According to the above formula (1), $V_{flux}$ may be changed by application of the DC signal and the AC signal, so the two may be used to adjust the frequency of the qubit. The DC signal is used to adjust the operating frequency of the qubit in a large range, that is, coarse adjustment, and the AC signal is used to adjust the operating frequency of the qubit in a small range, that is, fine adjustment. A combination of coarse adjustment and fine adjustment enables more precise adjustment on the operating frequency of the qubit.

Ideally, the magnetic flux modulation signal applied to each qubit of the superconducting quantum chip only controls the frequency of the one qubit and does not affect frequencies of other qubits. In fact, it is difficult to analyze a flow direction of a current on the chip. From the perspective of a circuit model, the Z control line of the qubit not only has self-inductive coupling with its own superconducting quantum interferometer (SQUID), but also has mutual inductive coupling with SQUIDs of other qubits, resulting in a crosstalk phenomenon.

The crosstalk between the qubits may directly affect an adjustment effect of the magnetic flux modulation signal of any qubit on the frequency of the qubit, so that the frequency of the qubit cannot reach a predetermined target value, affecting overall performance of the superconducting quantum chip. Therefore, in a performance test on the superconducting quantum chip, a specific value of the crosstalk between the qubits is required to be measured so as to perform an appropriate compensation operation for the adjustment of the frequency of the qubit, so that the magnetic flux modulation signal adjusts the frequency of the qubit connected thereto to an expected value.

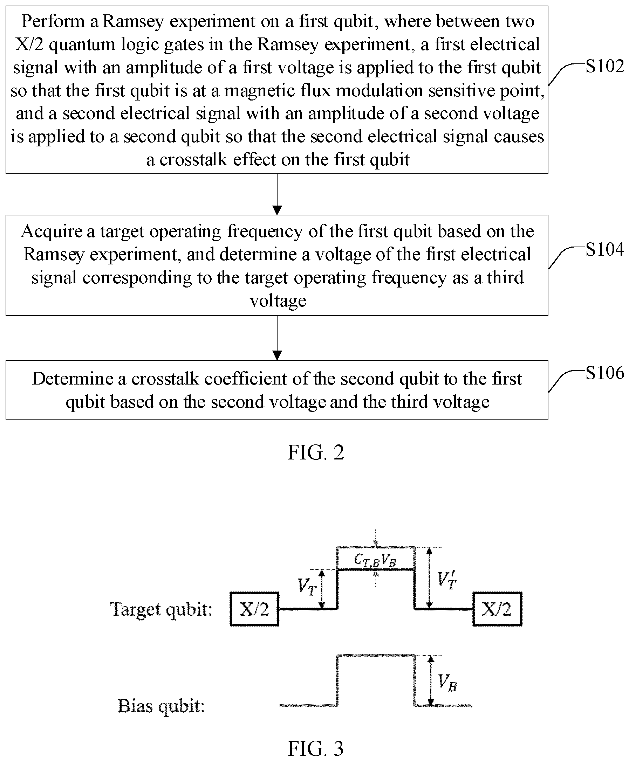

Embodiments of the present disclosure provide a method for determining crosstalk of qubits. Referring to FIG. 2, FIG. 2 is a flowchart of a method for determining crosstalk of qubits according to some embodiments of the present disclosure.

In this embodiment, a method for determining crosstalk of qubits of the quantum chip specifically includes the following steps.

In S102, a Ramsey experiment is performed on a first qubit. Between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit.

In the Ramsey experiment, two X/2 quantum logic gate operations are applied to a qubit with a time interval $\tau$ between the two operations, a read signal is applied, after the two X/2 quantum logic gate operations, to the qubit to obtain an excited state distribution probability $P1(\tau)$ of the qubit, and the time interval $\tau$ is changed to obtain $P1(\tau)$. Generally, a real-time frequency of a qubit may be obtained by performing the Ramsey experiment on the qubit.

The first qubit and the second qubit are selected. One of the qubits in the superconducting quantum chip is set as the first qubit, and another qubit is set as the second qubit.

Referring to FIG. 3, FIG. 3 is a timing diagram of an experiment for testing a crosstalk on a first qubit and a second qubit according to some embodiments of the present disclosure. A DC signal is configured for each qubit of the superconducting quantum chip, so that a frequency of each qubit is at a degenerate operating point. The Ramsey experiment is performed on the first qubit, two X/2 quantum logic gate operations are spaced by a time interval, the first qubit evolves in the time interval, and a first electrical signal is applied to the first qubit and a second electrical signal is applied to the second qubit in an intermediate evolution period. An amplitude of the first electrical signal is a first voltage, denoted as $V_T$, which causes the first qubit to be at a magnetic flux modulation sensitive point. An amplitude of the second electrical signal is a second voltage, denoted as $V_B$. Due to the existence of a crosstalk effect, the second voltage may cause a crosstalk effect on the frequency of the first qubit.

The first qubit is at the magnetic flux modulation sensitive point, so an operating frequency of the first qubit be sensitive to a change in the amplitude of the second electrical signal, and accordingly, the operating frequency of the first qubit changes with the change in the amplitude of the second electrical signal. The amplitude of the first electrical signal applied to the first qubit can be obtained by measuring a change in the operating frequency of the first qubit.

In S104, a target operating frequency of the first qubit is acquired based on the Ramsey experiment, and a voltage corresponding to the target operating frequency is determined as a third voltage.

It is to be noted that, Ramsey oscillation can be obtained by the Ramsey experiment performed on the first qubit, and a calculation formula of an oscillation frequency thereof is

$$f_{OS} = |f_d - f_{fringe} - f_{10}| \qquad (2)$$

where fos denotes a Ramsey oscillation frequency, $f_d$ denotes a carrier frequency of an X/2 quantum logic gate operation, fa is a known number, $f_{fringe}$ denotes a fringe frequency of the Ramsey experiment, and $f_{10}$ denotes the target operating frequency of the first qubit. Experimentally, through the measured Ramsey oscillation frequency, the set fringe frequency may be continuously updated to ensure that the Ramsey oscillation frequency is always within a small range, which can ensure that the Ramsey oscillation frequency may not exceed the highest frequency determined by a sampling theorem and ensure that a target bit frequency of the first qubit calculated by using the above formula (2) is highly accurate.

In S 106, a crosstalk coefficient of the second qubit to the first qubit is determined based on the second voltage and the third voltage.

In some embodiments, the first electrical signal is a first AC signal, and the second electrical signal is a second AC signal.

On this basis, in S104, the acquiring a target operating frequency of the first qubit based on the Ramsey experiment, and determining a voltage of the first electrical signal corresponding to the target operating frequency as a third voltage may specifically be:

acquiring the target operating frequency of the first qubit based on the Ramsey experiment, and acquiring the voltage corresponding to the target operating frequency as the third voltage based on a pre-acquired AC modulation spectrum of the first qubit.

On this basis, in S106, the determining a crosstalk coefficient of the second qubit to the first qubit based on the second voltage and the third voltage may specifically be:

determining an AC crosstalk coefficient of the second qubit to the first qubit based on the second voltage and the third voltage.

It is to be noted that, in some embodiments of the present disclosure, when the magnetic flux modulation signal is applied to adjust the frequency of the qubit, if crosstalk of the AC signal transmitted by the Z control line to the qubit is considered, crosstalk of the DC signal to the qubit is ignored. If the crosstalk of the DC signal transmitted by the Z control line to the qubit is considered, the crosstalk of the AC signal to the qubit is ignored.

Next, crosstalk determination when the crosstalk of the AC signal transmitted by the Z control line to the qubit is considered and the crosstalk of the DC signal to the qubit is ignored is taken as an example for introduction.

The AC modulation spectrum of the first qubit is a curve showing the frequency of the first qubit as a function of the amplitude of the first AC signal, which is obtained in advance by performing the Ramsey experiment on the first qubit. In the AC modulation spectrum, the target operating frequency of the first qubit is in one-to-one correspondence with a change value of the amplitude of the first AC signal. Therefore, after the target operating frequency of the first qubit is known, a voltage corresponding to the target operating frequency can be acquired from the AC modulation spectrum, and is denoted as a third voltage $V_T$'.

The second AC signal with the amplitude of the second voltage is applied to the second qubit, which causes a crosstalk effect on the first qubit. Accordingly, the operating frequency of the first qubit deviates from an original operating frequency corresponding to the first voltage and then reaches the target operating frequency. Therefore, the third voltage is an actual operating voltage of the first AC signal corresponding to the target operating frequency, and is generated by the first voltage changing by $C_{T,B}$*VB after the first voltage is affected by crosstalk. That is, the following linear relationship exists among the first voltage $V_T$, the second voltage $V_B$, and the third voltage $V_T$:

$$V_T'=V_T+C_{T,B}*V_B \qquad (3)$$

$C_{T,B}$ denotes an AC crosstalk coefficient of the second voltage $V_B$ of the second qubit to the first qubit.

In some embodiments of the present disclosure, in order to facilitate calculation of experimental results of the crosstalk test, the first AC signal and the second AC signal are both implemented by square-wave signals. It is to be noted that those skilled in the art may select other types of AC signals (such as triangular waves and trapezoidal waves) for experiments according to an actual requirement in practical applications, as long as the AC crosstalk coefficient $C_{T,B}$ obtained from the experiment meets a requirement for experimental accuracy.

In addition, in order to further ensure that the operating frequency of the first qubit is only affected by the change in the amplitude of the second AC signal, pulse widths of the second AC signal and the first AC signal are set to equal values.

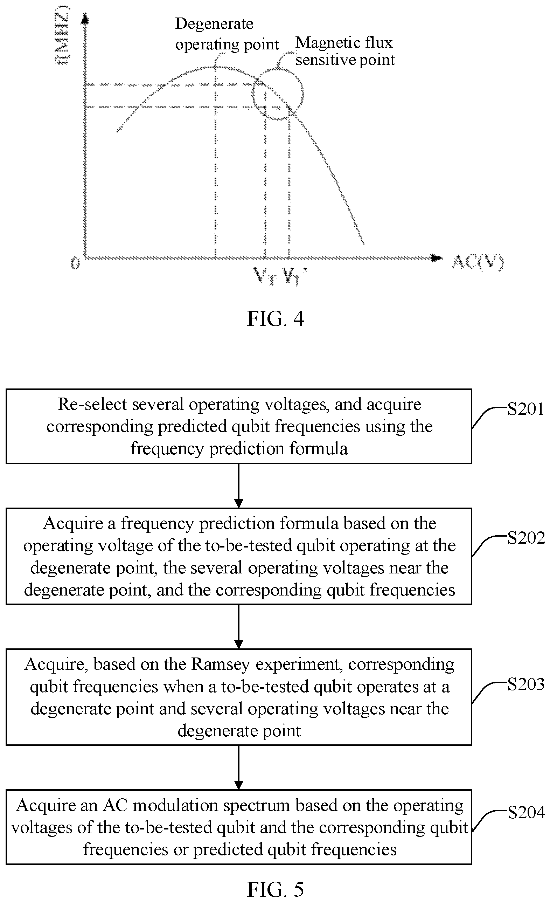

Referring to FIG. 4, FIG. 4 is a curve of an AC modulation spectrum of the first qubit in the superconducting quantum chip according to some embodiments of the present disclosure. The applying a first electrical signal with an amplitude of a first voltage to the first qubit so that the first qubit is at a magnetic flux modulation sensitive point in step S102 specifically includes the following steps:

S1021: determining a degenerate operating point of the first qubit according to the AC modulation spectrum;
S1022: determining, according to the degenerate operating point and a preset frequency deviation, a magnetic flux modulation sensitive point associated with the degenerate operating point; and
S1023: determining the first voltage according to the magnetic flux modulation sensitive point, and setting amplitude of the first AC signal to the first voltage.

It is to be noted that the degenerate operating point is a maximum operating frequency point in the AC modulation spectrum of the first qubit, and at the degenerate operating point, the first qubit is insensitive to a change in the magnetic flux modulation signal. In order to accurately measure the AC crosstalk coefficient, the frequency of the first qubit is set at an operating point sensitive to a change in the amplitude of the applied AC signal, that is, the magnetic flux modulation sensitive point. The magnetic flux modulation sensitive point is provided near the degenerate operating point, which may be determined according to the degenerate operating point and the preset frequency deviation. In some embodiments, the magnetic flux modulation sensitive point is provided at a position deviating from the degenerate operating point by 50 MHz.

In some embodiments of the present disclosure, in order to obtain a relatively accurate AC crosstalk coefficient, the AC crosstalk coefficient may be solved by measuring several sets of data and performing linear fitting. Therefore, step S106 of determining a crosstalk coefficient of the second qubit to the first qubit based on the second voltage and the third voltage may further include:

S1061: acquiring a set of first data, the first data including the first voltage, the second voltage, and the third voltage;
S1062: determining whether a number of sets of the first data satisfies a preset condition;
S1063: if yes, linearly fitting a relationship between the second voltage and the third voltage based on all of the first data to determine the AC crosstalk coefficient of the second qubit to the first qubit; and
S1064: if not, resetting the magnitude of the second voltage, and going back to perform the Ramsey experiment on the first qubit.

Those skilled in the art may understand that, each time the Ramsey experiment is performed on the first qubit, a set of the first data including the first voltage, the second voltage, and the third voltage may be obtained using parameters of the Ramsey experiment and an AC modulation spectrum, and a number of sets of the first data acquired is in one-to-one correspondence with a number of times of performing of the Ramsey experiment. The more sets of the first data are acquired, the closer the AC crosstalk coefficient linearly fitted by the second voltage and the third voltage of all sets of the first data is to a true value. Therefore, the preset condition includes presetting a number of times of performing of the Ramsey experiment. It is to be noted that the preset number of times of performing of the Ramsey experiment may be set according to an actual requirement for accuracy of the AC crosstalk coefficient. In addition, the preset condition may alternatively be other judgment conditions, as long as the judgment conditions enable the AC crosstalk coefficient to meet the requirement for accuracy, which will not be described one by one herein.

In some embodiments of the present disclosure, the linearly fitting a relationship between the second voltage and the third voltage based on all of the first data, to determine the AC crosstalk coefficient of the second qubit to the first qubit in step S1063 may include the following steps:

S10631: calculating, for each set of the first data, a difference between the third voltage relative and the first voltage, and acquiring a coefficient of a linear relationship between the difference and the second voltage; and
S10632: acquiring an average value of all the coefficients, and taking the average value of the coefficients as the AC crosstalk coefficient of the second qubit to the first qubit.

In some embodiments, if the number of times of performing the Ramsey experiment is set to M, the number of all sets of the first data acquired is M. For a certain set of the first data, a difference between the third voltage and the first voltage is denoted as $\Delta V_T$. Then, $\Delta V_T = V_T' - V_T$. A coefficient of a linear relationship between the difference and the second voltage is $\Delta V_T / V_B$, denoted as $C_i$. An average value of M sets of coefficients is $\dfrac{\sum_i^M C_i}{M}$, denoted as C, and C is taken as the AC crosstalk coefficient of the second qubit to the first qubit.

It is to be noted that, herein, the AC crosstalk coefficient is determined by averaging. Those skilled in the art may determine the AC crosstalk coefficient in other data optimization processing manners, as long as the requirement for accuracy of the AC crosstalk coefficient is met.

In the above embodiments, the resetting the magnitude of the second voltage may include: increasing or decreasing the second voltage within a preset range according to a preset step size.

Specifically, according to a relationship between the Ramsey oscillation frequency and the operating frequency of the first qubit after being affected by the crosstalk shown in the above formula (2), a change of the operating frequency of the first qubit affected by the crosstalk is synchronized with a change in the Ramsey oscillation frequency. Based on this, the change in the operating frequency of the first qubit after being affected by the crosstalk is required to be maintained within a predetermined frequency range, which may be set to, for example, a narrow bandwidth frequency range with the magnetic flux modulation sensitive point frequency of the first qubit as a central value. According to a corresponding relationship between the change in the target operating frequency and the voltage of the AC signal in the AC modulation spectrum of the first qubit and a relationship between the change in the amplitude of the AC signal (i.e., the third voltage) and the second voltage, the second voltage is also required to be within a certain range. In some embodiments, the value of the second voltage may be adjusted within a preset range according to a preset step size, and for the convenience of adjustment, may be further adjusted according to an increasing or decreasing rule.

The superconducting quantum chip is provided with a plurality of qubits, and there is crosstalk between any two qubits. An AC crosstalk coefficient of any two of the qubits is acquired and summarized separately, and the crosstalk coefficients are characterized by an AC crosstalk matrix.

The AC modulation spectrum of the first qubit in the above embodiments is a curve of the frequency of the first qubit as a function of the amplitude of the first AC signal, which is obtained in advance by performing the Ramsey experiment on the first qubit. Therefore, a method for acquiring an AC modulation spectrum is taken as an example for elaboration in some other embodiments of the present disclosure.

Referring to FIG. 5, FIG. 5 is a flowchart of a method for acquiring an AC modulation spectrum according to some embodiments of the present disclosure.

In this embodiment, the method for acquiring an AC modulation spectrum specifically includes the following steps:

S201: acquiring, based on the Ramsey experiment, qubit frequencies of a to-be-tested qubit when the to-be-tested qubit operates at a degenerate point and several operating voltages near the degenerate point;
S202: acquiring a frequency prediction formula based on the operating voltages of the to-be-tested qubit operating at the degenerate point, the several operating voltages near the degenerate point, and the corresponding qubit frequencies;
S203: re-selecting several operating voltages, and acquiring corresponding predicted qubit frequencies using the frequency prediction formula; and
S204: acquiring the AC modulation spectrum based on the operating voltages of the to-be-tested qubit and the corresponding qubit frequencies or predicted qubit frequencies.

According to the method for acquiring an AC modulation spectrum proposed in some embodiments of the present disclosure, when the to-be-tested qubit operates at a degenerate point and several operating voltages near the degenerate point, respective corresponding qubit frequencies are acquired by Ramsey experiment, and qubit frequencies of other operating points in the AC modulation spectrum are all acquired using the frequency prediction formula, which can effectively improve efficiency of the method for acquiring an AC modulation spectrum.

Those skilled in the art may understand that the degenerate point mentioned in step S201 refers to an operating point at which the to-be-tested qubit is insensitive to magnetic flux modulation. A quantity of the several operating voltages near the degenerate point may be selected according to an actual requirement. In this embodiment, the quantity of the several operating voltages near the degenerate point may be two, coordinates of three points, i.e., the degenerate point and the two operating voltages, in the AC modulation spectrum may be obtained, and the frequency prediction formula may be calculated based on the coordinates of the three points.

In this embodiment, the frequency prediction formula may be set to $y=ax^2+bx+c$, where x denotes the operating voltage of the to-be-tested qubit, y denotes the frequency of the to-be-tested qubit, a, b, and c denote three parameters of the frequency prediction formula, a, b, and c may be calculated through the known coordinates of the three points.

In experience, the corresponding qubit frequency acquired by using the Ramsey experiment requires further processing of results of the Ramsey experiment, and is not directly acquired. Therefore, if frequencies corresponding to all operating points of the to-be-tested qubit are all acquired through the Ramsey experiment, it takes a lot of testing time and is extremely inefficient. However, with the method proposed in the present disclosure, efficiency of acquisition of the AC modulation spectrum of the to-be-tested qubit can be effectively improved.

In some embodiments, since a predicted qubit frequency acquired only using the frequency prediction formula cannot be ensured to be consistent with an actual frequency, if accuracy of the AC modulation spectrum obtained is desired to be improved, the predicted qubit frequency is further required to be judged, so as to obtain an accurate qubit frequency value. In some embodiments of the present disclosure, S203 of re-selecting several operating voltages, and acquiring corresponding predicted qubit frequencies using the frequency prediction formula specifically includes:

S3011: re-selecting an operating voltage, acquiring a predicted qubit frequency using the frequency prediction formula, performing the Ramsey experiment on the to-be-tested qubit, and determining whether the predicted qubit frequency is accurate;

S3012: when a determining result is Yes, setting the predicted qubit frequency corresponding to the current operating voltage to a normal frequency;

S3013: determining whether a first condition is satisfied, where the first condition is determined by traversed operating voltages and/or acquired qubit frequencies of the to-be-tested qubit;

if not, going back to perform step S3011; and

if yes, performing step S204.

For example, an AC modulation spectrum is required to satisfy that operating voltages on the abscissa and qubit frequencies on the ordinate are in sufficiently wide ranges. Therefore, the AC modulation spectrum finally required at least satisfies that the operating voltages on the abscissa are in a sufficiently wide range or the qubit frequencies on the ordinate are in a sufficiently wide range. In the method for acquiring the AC modulation spectrum, there is a need to preset required ranges of the operating voltages and the qubit frequencies. For example, the operating voltages are required to satisfy a first range. That is, the operating voltages within the first range have all been traversed. Alternatively, a minimum region of the qubit frequencies in the AC modulation spectrum is set, which may be specifically determined by determining a difference between a maximum value and a minimum value of an acquired qubit frequency. For example, the difference may be set to 1 GHz. When the difference between the maximum value and the minimum value of the acquired qubit frequency is greater than or equal to 1 GHz, it indicates that the AC modulation spectrum in this case meets a current requirement. It is to be noted that those skilled in the art may alternatively set the required ranges of the operating voltages and the qubit frequencies at the same time. When the two conditions are satisfied, it indicates that the AC modulation spectrum meets the requirement.

The first condition includes: operating voltages of the to-be-tested qubit within the first range having all been traversed; and/or the difference between the maximum value and the minimum value of the acquired qubit frequency of the to-be-tested qubit being no less than a first threshold.

In some embodiments, the use of the frequency prediction formula acquired at the degenerate point and the several operating voltages near the degenerate point cannot ensure that a qubit frequency with accuracy meeting a certain requirement can be acquired through the frequency prediction formula. In an application scenario where there is a certain requirement for the accuracy of the AC modulation spectrum, there is a need to improve the accuracy of the AC modulation spectrum. Therefore, there is a need to update the frequency prediction formula in real time. In a specific method, each time a normal frequency is obtained, the frequency prediction formula is updated by using the corresponding operating voltage and a value of the normal frequency in conjunction with the several operating points acquired previously. Through this real-time update method, the accuracy of the AC modulation spectrum can be further improved. That is, subsequent to the setting the predicted qubit frequency corresponding to the current operating voltage to a normal frequency, the method further includes:

updating the frequency prediction formula based on the current operating voltage and the corresponding predicted qubit frequency.

In this embodiment, the initial frequency prediction formula is obtained through the first three operating points. In specific implementation, for each of the fourth operating point and the subsequent operating points, three obtained operating points before the current operating point may be used to re-acquire the frequency prediction formula, so as to update the frequency prediction formula. It may be understood that the selection is not limited to the last three obtained operating points before the current operating point, and any three of all operating points obtained before the current operating point may be selected.

The performing the Ramsey experiment on the to-be-tested qubit, and determining whether the predicted qubit frequency is accurate includes:

acquiring a first frequency based on the predicted qubit frequency corresponding to the current operating voltage; and adding a pulse whose frequency is the first frequency to the second $\pi/2$ quantum logic gate of the Ramsey experiment, and determining whether the obtained oscillation frequency is within a preset range, wherein if the predicted qubit frequency is the same as the normal frequency of the to-be-tested qubit, the oscillation frequency obtained through the Ramsey experiment is the first frequency, and if not, the oscillation frequency obtained is the first frequency $\pm$ a frequency difference; a frequency difference tolerance value may be set, that is, a frequency within a tolerance value range having a frequency difference is still considered to meet the requirement, and the tolerance value may be set according to an actual requirement;
if yes, determining that the predicted qubit frequency is accurate; and
if not, determining that the predicted qubit frequency is inaccurate.

The first frequency may be acquired through the following formula:

$$ f_1 = f_d + IF - f_{10} - f_{osc} \quad (4) $$

where $f_1$ denotes the first frequency, $f_d$ denotes a driving frequency of the to-be-tested qubit, IF denotes a frequency of a modulating wave, $f_{10}$ denotes the predicted qubit frequency, and $f_{osc}$ denotes a preset value of the oscillation frequency.

According to the foregoing analysis, since the frequency obtained through the frequency prediction formula may not necessarily meet the requirement for accuracy, when the AC modulation spectrum is fit finally using all the operating points and the corresponding qubit frequencies, the AC modulation spectrum is acquired only by selecting the frequencies obtained using the Ramsey experiment in the first few times and the normal frequency obtained later and operating voltages corresponding thereto. That is, step S204 of acquiring the AC modulation spectrum based on the operating voltage of the to-be-tested qubit and the corresponding qubit frequencies or predicted qubit frequencies specifically includes:

obtaining the AC modulation spectrum in a first coordinate system by fitting based on the operating voltage of the to-be-tested qubit at the degenerate point, the several operating voltages near the degenerate point, the corresponding qubit frequencies, all the normal frequencies, and the corresponding operating voltages, where the abscissa of the first coordinate system is the operating voltages of the to-be-tested qubit, and the ordinate of the first coordinate system is the frequency of the to-be-tested qubit.

Step S201 of acquiring, based on the Ramsey experiment, qubit frequencies of a to-be-tested qubit when the to-be-tested qubit operates at a degenerate point and several operating voltages near the degenerate point includes:

arranging an operating point of the to-be-tested qubit at the degenerate point, and performing the Ramsey experiment on the to-be-tested qubit to acquire the corresponding qubit frequencies;
providing the operating point of the to-be-tested qubit at a first operating point, and performing the Ramsey experiment on the to-be-tested qubit to acquire the corresponding qubit frequencies, where the first operating point is one of several preset operating points close to the degenerate point;
determining whether all the several operating points have been traversed;
if yes, ending the process; and
if not, going back to perform the step of providing the operating point of the to-be-tested qubit at a first operating point, and performing the Ramsey experiment on the to-be-tested qubit to acquire the corresponding qubit frequencies.

Measurement of an AC crosstalk matrix of a superconducting quantum chip is taken as an example for elaboration in some other embodiments of the present disclosure.

In the embodiments, the AC crosstalk matrix includes AC crosstalk coefficients between several qubits in a to-be-tested quantum chip, and the AC crosstalk coefficients are determined with the method for determining crosstalk of qubits described in Embodiment 1.

For example, each of the AC crosstalk coefficients is an element in the AC crosstalk matrix. For a superconducting quantum chip including N qubits, the AC crosstalk coefficient is denoted as $C_{ij}$ ($1 \leq i$, $j \leq N$), where $C_{ij}$ denotes an element in an $i^{th}$ row and a $j^{th}$ column in the AC crosstalk matrix. When i=j, $C_{ij}$ denotes a self-perturbation coefficient of an $i^{th}$ qubit in the superconducting quantum chip, and $C_{ij}$=1. When i≠j, $C_{ij}$ denotes an AC crosstalk coefficient of the $i^{th}$ qubit in the superconducting quantum chip affected by AC crosstalk of a $j^{th}$ qubit.

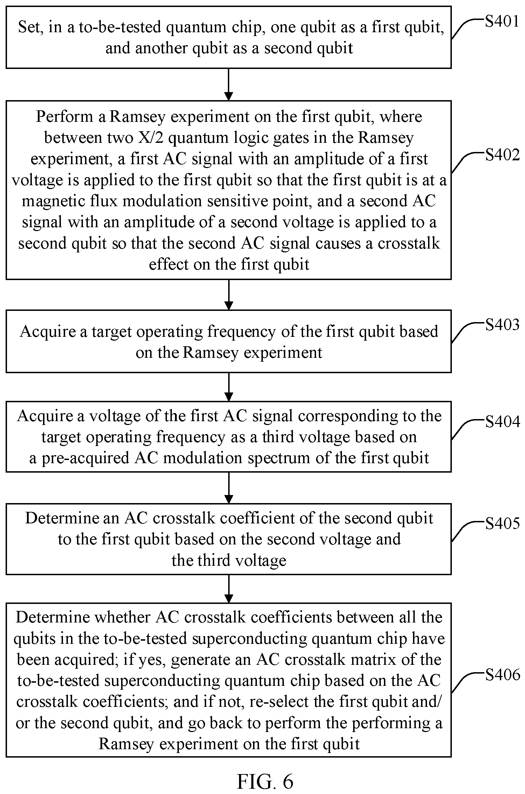

In some embodiments, referring to FIG. 6, FIG. 6 is a flowchart of a method for acquiring an AC crosstalk matrix of a superconducting quantum chip according to some embodiments of the present disclosure. Another method for measuring an AC crosstalk matrix of a quantum chip is taken as an example for elaboration in Embodiment 4 of the present disclosure. The method includes the following steps.

In S401, in a to-be-tested quantum chip, one qubit is set as a first qubit, and another qubit is set as a second qubit.

In S402, a Ramsey experiment is performed on the first qubit. Between two X/2 quantum logic gates in the Ramsey experiment, a first AC signal with an amplitude of a first voltage is applied to the first qubit so that the first qubit is at a magnetic flux modulation sensitive point, and a second AC signal with an amplitude of a second voltage is applied to a second qubit so that the second AC signal causes a crosstalk effect on the first qubit.

In S403, a target operating frequency of the first qubit is acquired based on the Ramsey experiment.

In S404, a voltage corresponding to the target operating frequency is acquired as a third voltage based on a pre-acquired AC modulation spectrum of the first qubit.

In S405, an AC crosstalk coefficient of the second qubit to the first qubit is determined based on the second voltage and the third voltage.

In S406, it is determined whether AC crosstalk coefficients between all the qubits in the to-be-tested superconducting quantum chip have been acquired; if yes, an AC crosstalk matrix of the to-be-tested superconducting quantum chip is generated based on the AC crosstalk coefficients; and if not, the first qubit and/or the second qubit are/is reselected, and the performing a Ramsey experiment on the first qubit is performed.

It is to be noted that step S405 of determining an AC crosstalk coefficient of the second qubit to the first qubit based on the second voltage and the third voltage further includes the following steps:

S4051: acquiring a set of first data, the set of first data including the first voltage, the second voltage, and the third voltage;

S4052: determining whether a number of sets of the first data satisfies a preset condition; if yes, performing step S4053, and if not, performing step S4054;

S4053: linearly fitting a relationship between the second voltage and the third voltage based on all of the first data to determine the AC crosstalk coefficient of the second qubit to the first qubit; and

S4054: resetting the magnitude of the second voltage, and going back to perform the performing a Ramsey experiment on a first qubit.

It is to be noted that, in step S4052, the preset condition includes presetting a number of times of performing of the Ramsey experiment. Refer to the description in Embodiment 1 for details. The details are not described herein again.

It is to be noted that, in step S4053, the linearly fitting a relationship between the second voltage and the third voltage based on all of the first data, to determine the AC crosstalk coefficient of the second qubit to the first qubit further includes the following steps:

S40531: calculating, for each set of first data, a difference between the third voltage relative and the first voltage, and acquiring a coefficient of a linear relationship between the difference and the second voltage; and

S40532: acquiring an average value of all the coefficients, and taking the average value of the coefficients as the AC crosstalk coefficient of the second qubit to the first qubit.

Refer to the description in Embodiment 1 for details. The details are not described herein again.

In step S4054, the resetting the magnitude of the second voltage includes: increasing or decreasing the second voltage within a preset range according to a preset step size. Refer to the description in Embodiment 1 for details. The details are not described herein again.

It should be understood that sequence numbers of the steps in the above embodiments do not mean execution sequences. The execution sequences of the processes should be determined based on functions and internal logic of the processes, and should not be construed as any limitation on the implementation processes of the embodiments of the present disclosure.

In some other embodiments of the present disclosure, for acquisition of a DC crosstalk coefficient between the qubits, the first electrical signal is a first DC signal, and the second electrical signal is a second DC signal.

On this basis, in step S104, the acquiring a target operating frequency of the first qubit based on the Ramsey experiment, and determining a voltage of the first electrical signal corresponding to the target operating frequency as a third voltage may include:

acquiring the target operating frequency of the first qubit based on the Ramsey experiment, and obtaining the voltage corresponding to the target operating frequency based on an energy spectrum of the first qubit as the third voltage, where the energy spectrum is a variation curve of the frequency of the qubit as a function of the voltage.

On this basis, in step S106, the determining a crosstalk coefficient of the second qubit to the first qubit based on the second voltage and the third voltage may include:

determining a DC crosstalk coefficient of the second qubit to the first qubit based on the second voltage and the third voltage.

An objective of embodiments of the present disclosure is to provide a method for acquiring a DC crosstalk coefficient between qubits. Specifically, on the premise that a magnitude of a pulse bias signal on a Z signal transmission line of each qubit is a first constant, DC crosstalk coefficients and a DC crosstalk matrix between qubits are acquired, so as to perform appropriate compensation operations during the frequency adjustment of the qubit, so that the frequency of the qubit adjusted by a magnetic flux control signal reaches an expected value. The setting the magnitude of the pulse bias signal on the Z signal transmission line of each qubit to the first constant is intended to ensure that, when a DC crosstalk test is performed, the pulse bias signal applied to any one of the qubits has a fixed and identical crosstalk effect on other qubits, thereby preventing interference with the DC crosstalk test. In some embodiments, the first constant is 0.

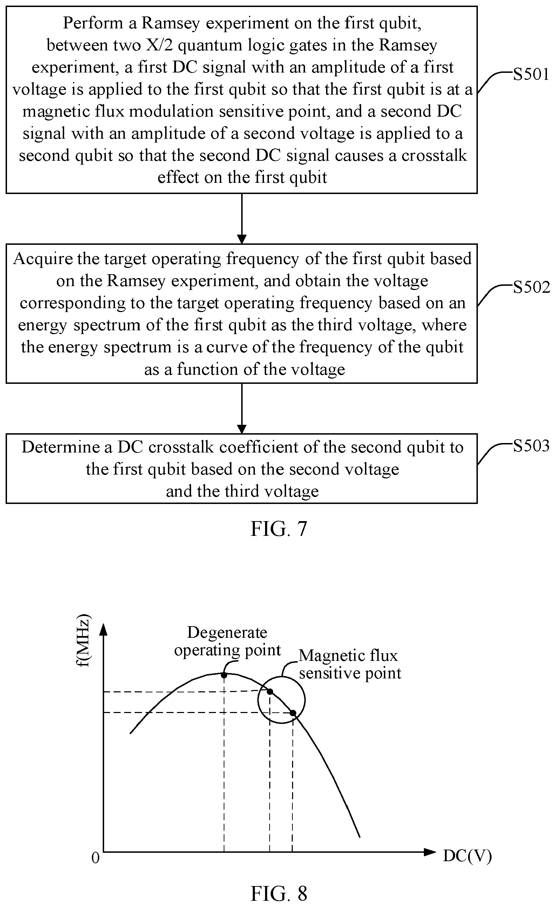

The present disclosure provides a method for acquiring a DC crosstalk coefficient between qubits. Referring to FIG. 7, FIG. 7 is a flowchart of a method for acquiring a DC crosstalk coefficient between qubits according to some embodiments of the present disclosure. The acquisition method includes the following steps.

In S501, a Ramsey experiment is performed on the first qubit, where between two X/2 quantum logic gates in the Ramsey experiment, a first DC signal with an amplitude of a first voltage is applied to the first qubit so that the first qubit is at a magnetic flux modulation sensitive point, and a second DC signal with an amplitude of a second voltage is applied to a second qubit so that the second DC signal causes a crosstalk effect on the first qubit.

Specifically, the quantum chip is provided with a plurality of qubits, each of the qubits is coupled with a Z signal transmission line, any one of the plurality of qubits is used as the first qubit, and the first voltage is applied to the first qubit through the Z signal transmission line corresponding thereto, so that the first qubit has a first frequency at a magnetic flux modulation sensitive point. The first voltage is a fixed value.

More specifically, referring to FIG. 8, FIG. 8 shows a qubit energy spectrum according to some embodiments of the present disclosure. The magnetic flux modulation sensitive point is at a position where a slope of a curve of the frequency of the qubit as a function of the voltage is large in FIG. 8 and is located on a right half of the curve (that is, a reciprocal of the magnetic flux modulation sensitive point is negative).

In addition, it may be understood that a reason why the first qubit has the first frequency at the magnetic flux modulation sensitive point is that at the magnetic flux modulation sensitive point, the first qubit is most sensitive to changes in the voltage and has the most obvious frequency fluctuation. Therefore, at the magnetic flux modulation sensitive point, the influence of other qubits on the first qubit is also the most obvious, so that a result is more accurate when a crosstalk coefficient produced by other qubits on the first qubit is acquired. It is to be noted that the first qubit cannot be placed at an excessively sensitive operating point. Otherwise, the frequency of the qubit fluctuates greatly due to noise and coherence time is short, which is not conducive to measurement.

Specifically, any one of the plurality of qubits except the first qubit is used as the second qubit, and the second voltage is applied to the Z signal transmission line corresponding thereto, so that the second qubit produces DC crosstalk on the first qubit. Specifically, the second voltage is a single adjustable voltage value.

In step S502, the target operating frequency of the first qubit is acquired based on the Ramsey experiment, and the voltage corresponding to the target operating frequency is obtained based on an energy spectrum curve of the first qubit as the third voltage, where the energy spectrum curve is a curve of the frequency of the qubit as a function of the voltage.

The Ramsey experiment refers to a process of applying two $\pi/2$ quantum logic gate operations to a qubit with a time interval $\tau$ between the two operations, applying, after the two $\pi/2$ quantum logic gate operations, a read pulse to the qubit to obtain an excited state distribution probability $P1(\tau)$ of the qubit, and changing the time interval $\tau$ to obtain $P1(\tau)$.

A typical result of the Ramsey experiment is $P1(\tau)$, and a mathematical model satisfying exponential oscillation decay over the time interval $\tau$ is as follows:

$$P_{fd}\left(\tau\right) = B + A\cos\left(2\pi f_0 \tau\right)e^{-\tau/T_0} \qquad (5)$$

In the above formula (5), A and B are fitting coefficients, $T_0$ denotes de-coherence time of the qubit, $f_d$ denotes a carrier frequency of a microwave pulse signal corresponding to a $\pi$ quantum logic gate operation, $f_0$ denotes an oscillation frequency of the qubit, and $f_0$, an actual frequency $f_q$ of the qubit, and the carrier frequency $f_d$ of the $\pi$ quantum logic gate operation satisfy:

$$f_0(f_d) = \left| f_q - f_d \right| \qquad (6)$$

Based on the above, the result of the Ramsey experiment, that is, an oscillation frequency of a $P_1(\tau)$ curve, is equal to a difference between the carrier frequency of the quantum logic gate operation and the actual frequency of the qubit. Therefore, in addition to obtaining the de-coherence time of the qubit, the Ramsey experiment can also accurately obtain the operating frequency of the qubit at the same time.

Specifically, in this embodiment, the operating frequency of the first qubit, that is, an actual operating frequency after the first frequency of the first qubit is affected by crosstalk of the second voltage, may be obtained based on the Ramsey experiment. Then, a third voltage corresponding to the actual operating frequency is obtained based on the energy spectrum curve of the first qubit. Referring to FIG. 8, the energy spectrum curve is a variation curve of frequencies of the qubit with voltages, and the frequencies are in one-to-one correspondence with the voltages. Therefore, if the operating frequency of the target bit is known, the third voltage corresponding thereto can be correspondingly obtained.

In step S503, a DC crosstalk coefficient of the second qubit to the first qubit is determined based on the second voltage and the third voltage.

Specifically, when the second voltage is not applied to the Z signal transmission line of the second qubit, that is, the second voltage is 0, the frequency of the first qubit is the first frequency, and the voltage corresponding thereto is the first voltage. For example, the first voltage is a fixed value V It is to be noted that the setting is equivalent to that the third voltage is V when the second voltage is 0. The second voltage that is not 0 is applied to the Z signal transmission line of the second qubit. For example, the applied second voltage is V1. The frequency of the first qubit fluctuates due to crosstalk. In this case, the frequency of the first qubit changes from the first frequency to the operating frequency, and the voltage corresponding to the operating frequency is the third voltage. For example, the third voltage obtained in this case is V2.

Based on the above, two specific coordinate point data (0, V) and (V1, V2) can be obtained. The second voltage is set to $V_x$ and used as an independent variable, and the third voltage is set to $V_y$ and used as a dependent variable. A linear equation $V_y = V + C*V_x$ can be obtained by linear fitting the second voltage Vx and the third voltage $V_y$ based on the above two coordinate point data. The value of the slope C of the linear equation is the crosstalk coefficient of the second qubit to the first qubit.

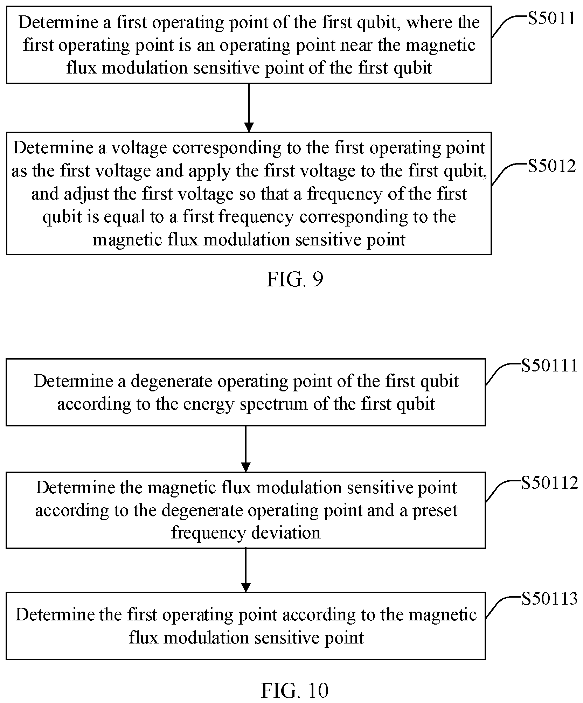

In some embodiments, referring to FIG. 9, FIG. 9 is a flowchart of applying a first electrical signal with an amplitude of a first voltage to the first qubit so that the first qubit is at a magnetic flux modulation sensitive point according to some embodiments of the present disclosure, which specifically includes the following steps.

In step S5011, a first operating point of the first qubit is determined, where the first operating point is an operating point near the magnetic flux modulation sensitive point of the first qubit.

Specifically, the operating point near the magnetic flux modulation sensitive point is selected as the first operating point. Specifically, the first operating point is an operating point within a range of $\pm 50$ MHz with respect to the magnetic flux modulation sensitive point.

In step S5012, a voltage corresponding to the first operating point is determined as the first voltage and the first voltage is applied to the first qubit, and the first voltage is adjusted so that a frequency of the first qubit is equal to a first frequency corresponding to the magnetic flux modulation sensitive point.

Specifically, the corresponding first voltage is acquired according to the frequency of the first operating point and the energy spectrum curve of the first qubit, and the first voltage is applied to the first qubit through the Z signal transmission line coupled with the first qubit. Then, a frequency value of the first qubit is acquired in real time based on the Ramsey experiment. If the frequency value is different from the first frequency, it indicates that the currently applied first voltage has not reached the requirement, the value of the first voltage is continuously adjusted until the applied first voltage enables the frequency of the first qubit to be equal to the first frequency corresponding to the magnetic flux modulation sensitive point.

In some embodiments, referring to FIG. 10, FIG. 10 is a flowchart of determining a first operating point of the first qubit according to some embodiments of the present disclosure. The determining a first operating point of the first qubit specifically includes the following steps.

In step S50111, a degenerate operating point of the first qubit is determined according to the energy spectrum curve of the first qubit.

Specifically, the energy spectrum of the first qubit is acquired based on the Ramsey experiment. Referring to FIG. 8, a position with a maximum frequency on the energy spectrum curve, that is, a vertex of the curve shown in FIG. 8, is defined as the degenerate operating point of the first qubit. At the position, the frequency of the first qubit changes very little as a function of the applied voltage, and is the least sensitive to noise. Therefore, in the method for acquiring a DC crosstalk coefficient between qubits provided in this embodiment, a point near the degenerate operating point cannot be selected as the first operating point, and the degenerate operating point can only be used as a reference point for selecting the magnetic flux modulation sensitive point.

In step S50112, the magnetic flux modulation sensitive point is determined according to the degenerate operating point and a preset frequency deviation.

Specifically, the preset frequency deviation ranges from 40 MHz to 60 MHz. When the magnetic flux modulation sensitive point is selected, any point offset from the frequency corresponding to the degenerate point and having a value within the preset frequency deviation range may be used as the magnetic flux modulation sensitive point. In some embodiments, one point within the preset frequency deviation range is 50 MHz.

In step S50113, the first operating point is determined according to the magnetic flux modulation sensitive point.

Specifically, the operating point near the magnetic flux modulation sensitive point is selected as the first operating point. Specifically, the first operating point is an operating point within a range of $\pm 50$ MHz from the magnetic flux modulation sensitive point.

In addition, in some embodiments, the energy spectrum curve is an energy spectrum curve of the frequency of the first qubit that is affected by the second voltage.

Specifically, the energy spectrum curve of the first qubit affected by crosstalk of the second voltage may change. A specific change is that the energy spectrum curve may undergo a translation along an abscissa axis. It may be understood that, in step S503, the operating frequency of the first qubit is obtained based on the Ramsey experiment, the value of the third voltage corresponding to the operating frequency obtained based on the energy spectrum curve of the frequency of the first qubit that is affected by the second voltage is more accurate, and the DC crosstalk coefficient of the second qubit to the first qubit subsequently acquired based on the second voltage and the third voltage is also more accurate.

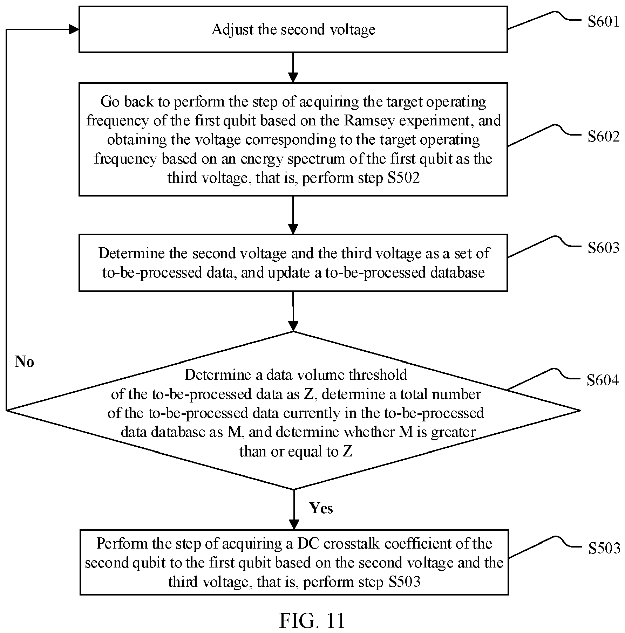

In some embodiments, referring to FIG. 11, FIG. 11 is a flowchart of re-acquiring the second voltage and the third voltage according to some embodiments of the present disclosure. Prior to the determining a DC crosstalk coefficient of the second qubit to the first qubit based on the second voltage and the third voltage, the method further includes the following steps.

In step S601, the second voltage is adjusted.

Specifically, the second voltage is a single adjustable voltage value. The voltage value of the second voltage is adjusted through a signal generator.

In step S602, the step of acquiring the target operating frequency of the first qubit based on the Ramsey experiment, and obtaining the voltage corresponding to the target operating frequency based on an energy spectrum curve of the first qubit as the third voltage is performed. That is, step S502 is performed.

Therefore, by adjusting the voltage value of the second voltage, amplitude of the crosstalk effect of the second voltage on the frequency of the first qubit can be changed, and a set of new data obtained after the crosstalk effect of the second voltage on the first qubit is obtained, so that a plurality of sets of the second voltage and the third voltage can be linearly fit when the DC crosstalk coefficient between the qubits is acquired based on the second voltage and the third voltage, thereby improving accuracy of the crosstalk coefficient.

In step S603, the second voltage and the third voltage are determined as a set of to-be-processed data, and a to-be-processed database is updated.

In step S604, a data volume threshold of the to-be-processed data is determined as Z, a total number of the to-be-processed data currently in the to-be-processed data database is determined as M, and it is determined whether M is greater than or equal to Z.

If yes, the step of determining a DC crosstalk coefficient of the second qubit to the first qubit based on the second voltage and the third voltage is performed. That is, step S503 is performed.

If not, the step of adjusting the second voltage is performed. That is, step S601 is performed.

Therefore, through the above cycle, the plurality of sets of the second voltage and the third voltage can be obtained, linear fitting is subsequently performed based on the plurality of sets of the second voltage and the third voltage to obtain a more accurate linear relationship between the two, and then a more accurate crosstalk coefficient of the second qubit to the first qubit is obtained. In this way, an appropriate compensation operation can be performed during the frequency adjustment of the qubit, so that the frequency of the qubit adjusted by a magnetic flux control signal reaches an expected value.

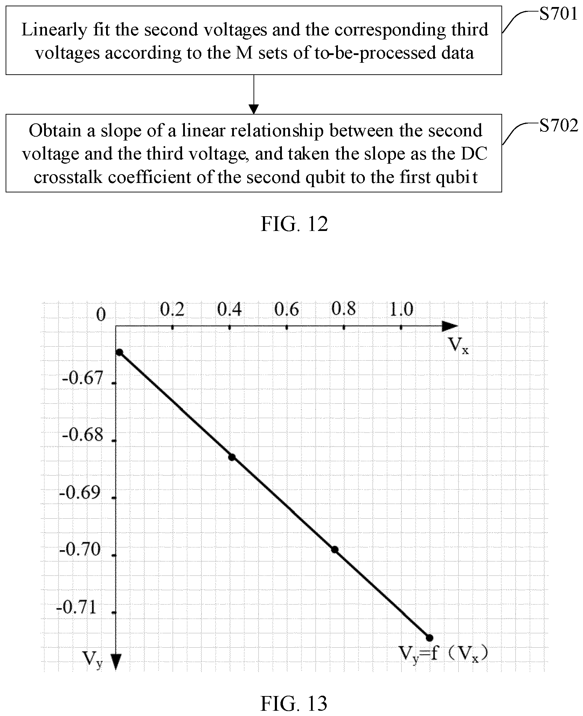

In addition, in some embodiments, referring to FIG. 12, FIG. 12 is a flowchart of acquiring a DC crosstalk coefficient of an interfering qubit to a target qubit based on the second voltage and the third voltage according to some embodiments of the present disclosure. The acquiring a DC crosstalk coefficient of the second qubit to the first qubit based on the second voltage and the third voltage specifically includes the following steps.

In step S701, the second voltage and the corresponding third voltage are linearly fit according to the M sets of to-be-processed data.

Specifically, referring to FIG. 13, FIG. 13 is a schematic diagram of linear fitting according to some embodiments of the present disclosure. The M sets of to-be-processed data are distributed in a rectangular coordinate system, and then a functional relationship $V_y=f(V_x)$ between the independent variable $V_x$ and the dependent variable $V_y$ is obtained by a general least square method. A straight line may be determined from the functional relationship, which is a straight line obtained by linear fitting.

In step S702, a slope of a linear relationship between the second voltage and the third voltage is obtained, and the slope is denoted as the DC crosstalk coefficient of the second qubit to the first qubit.

Specifically, the slope of the linear relationship between the second voltage and the third voltage is obtained according to the linearly fit straight line, and the slope is denoted as the DC crosstalk coefficient of the second qubit to the first qubit.

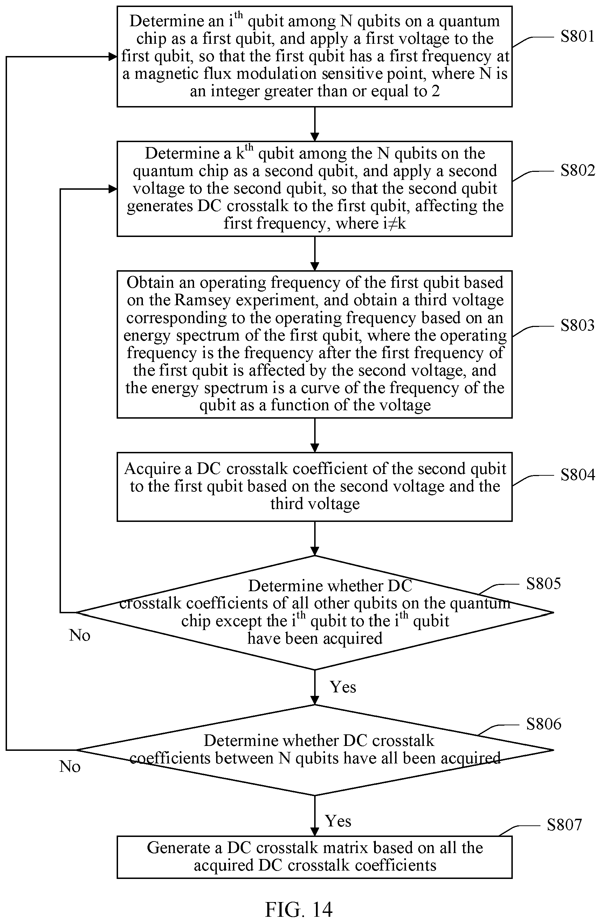

Some other embodiments of the present disclosure further provide a method for acquiring a DC crosstalk matrix between qubits. Referring to FIG. 14, FIG. 14 is a flowchart of a method for acquiring a DC crosstalk matrix between qubits according to some embodiments of the present disclosure. The acquisition method includes the following steps.

In step S801, an $i^{th}$ qubit among N qubits on a quantum chip is determined as a first qubit, and a first voltage is applied to the first qubit, so that the first qubit has a first frequency at a magnetic flux modulation sensitive point, where N is an integer greater than or equal to 2.

In step S802, a $k^{th}$ qubit among the N qubits on the quantum chip is determined as a second qubit, and a second voltage is applied to the second qubit, so that the second qubit generates DC crosstalk to the first qubit, affecting the first frequency, where $i \neq k$.

In step S803, an operating frequency of the first qubit is obtained based on the Ramsey experiment, and a third voltage corresponding to the operating frequency is obtained based on an energy spectrum curve of the first qubit, where the operating frequency is the frequency after the first frequency of the first qubit affected by the second voltage, and the energy spectrum curve is a curve of the frequency of the qubit as a function of the voltage.

In step S804, a DC crosstalk coefficient of the second qubit to the first qubit is acquired based on the second voltage and the third voltage.

In step S805, it is determined whether DC crosstalk coefficients of all other qubits on the quantum chip except the $i^{th}$ qubit to the $i^{th}$ qubit have been acquired.

If not, the $k^{th}$ qubit is re-selected, and the step of determining a $k^{th}$ qubit among the N qubits on the quantum chip as a second qubit, and applying a second voltage to the second qubit, so that the second qubit generates DC crosstalk to the first qubit, affecting the first frequency, where $i \neq k$, is performed. That is, step S802 is performed.

If yes, step S806 is performed to determine whether DC crosstalk coefficients between N qubits have all been acquired.

If not, the $i^{th}$ qubit is re-selected, and the step of determining an $i^{th}$ qubit among N qubits on a quantum chip as a first qubit, and applying a first voltage to the first qubit, so that the first qubit has a first frequency at a magnetic flux modulation sensitive point, where N is an integer greater than or equal to 2, is performed. That is, step S801 is performed.

If yes, step S807 is performed to generate a DC crosstalk matrix based on all the acquired DC crosstalk coefficients.

Based on the above, for example, if there are N qubits on the quantum chip, the DC crosstalk matrix generated based on the acquired DC crosstalk coefficients between qubits is an N*N matrix. Each of the DC crosstalk coefficients is an element of the DC crosstalk matrix. For a superconducting quantum chip including N qubits, the DC crosstalk coefficient is denoted as $C_{ij}$ ($1 \leq i, j \leq N$), where $C_{ij}$ denotes an element in an $i^{th}$ row and a $j^{th}$ column in the DC crosstalk matrix, which denotes a crosstalk coefficient of a $j^{th}$ qubit to an $i^{th}$ qubit. It may be understood that, when $i=j$, $C_{ij}=1$. That is, diagonal values of the N*N matrix are all 1.

Some other embodiments of the present disclosure further provide a method for determining DC crosstalk of qubits, which is specifically introduced as follows.

Based on the DC crosstalk effect between the qubits in the quantum chip, assuming that there are N bits in the quantum chip, the DC crosstalk matrix corresponding to the quantum chip is an N*N matrix. It is to be noted that a DC crosstalk coefficient of a magnetic flux modulation line of the qubit to the qubit is 1. That is, diagonal elements of the N*N matrix are all 1. Therefore, N*(N-1) elements in the crosstalk matrix are required to be determined, and each row has N-1 elements required to be determined. Taking a 3-qubit quantum chip as an example, a crosstalk matrix of the quantum chip is a 3*3 matrix. The crosstalk matrix is as follows:

$$\begin{pmatrix} C_{11} & C_{12} & C_{13} \\ C_{21} & C_{22} & C_{23} \\ C_{31} & C_{32} & C_{33} \end{pmatrix};$$

where $C_{11}$ denotes a DC crosstalk coefficient of a qubit Q1 to the qubit Q1, $C_{12}$ denotes a DC crosstalk coefficient of a qubit Q2 to the qubit Q1, $C_{21}$ denotes a DC crosstalk coefficient of the qubit Q1 to the qubit Q2, and so on. $C_{11}$, $C_{22}$, and $C_{33}$ are 1.

For those skilled in the art, when a quantum chip is obtained, how to accurately obtain DC crosstalk coefficients between qubits in the quantum chip is particularly important in an early quantum chip testing stage, and may directly affect reliability of a later chip use stage. It is foreseeable that, with the continuous development of technologies, a quantity of qubits in a quantum chip will be huge in the future. Quantum chips including hundreds of qubits, thousands of qubits or even tens of thousands of qubits will be put into use one after another. Therefore, in addition to accurately obtaining the DC crosstalk coefficient between the qubits in the quantum chip, fast and accurate acquisition must be realized.

Based on the above considerations, the embodiment provides a method for determining DC crosstalk of qubits. A set of initial operating voltages is first determined. An initial operating voltage of the first qubit enables the first qubit to be at a magnetic flux modulation sensitive point. An initial operating voltage of the second qubit enables the second qubit to cause no DC crosstalk effect on the first qubit. "Have no DC crosstalk effect" means that the second qubit is in a non-operating state or no DC signal is applied.

Those skilled in the art can understand that the DC crosstalk refers to crosstalk between DC signals applied to a qubit magnetic flux modulation line caused by leakage of an electromagnetic field, which essentially affects magnitude of a qubit magnetic flux. The magnetic flux modulation sensitive point mentioned herein is acquired from a modulation curve of frequencies of the qubit with magnetic fluxes. When the qubit operates at the magnetic flux modulation sensitive point, even if the magnetic flux changes slightly, the value corresponding to the frequency of the qubit may change greatly. Therefore, the setting of the initial operating voltage of the first qubit at the magnetic flux modulation sensitive point can make it easier to observe the effect of DC crosstalk. Then, the operating voltage of the second qubit is adjusted to the fourth voltage so that the second qubit causes a DC crosstalk effect on the first qubit, and the operating voltage of the first qubit is continuously adjusted to the fifth voltage so that the frequency of the first qubit returns to a frequency corresponding to an initial operating voltage. Finally, a DC crosstalk coefficient of the second qubit to the first qubit is obtained based on the initial operating voltage, the fourth voltage, and the fifth voltage.

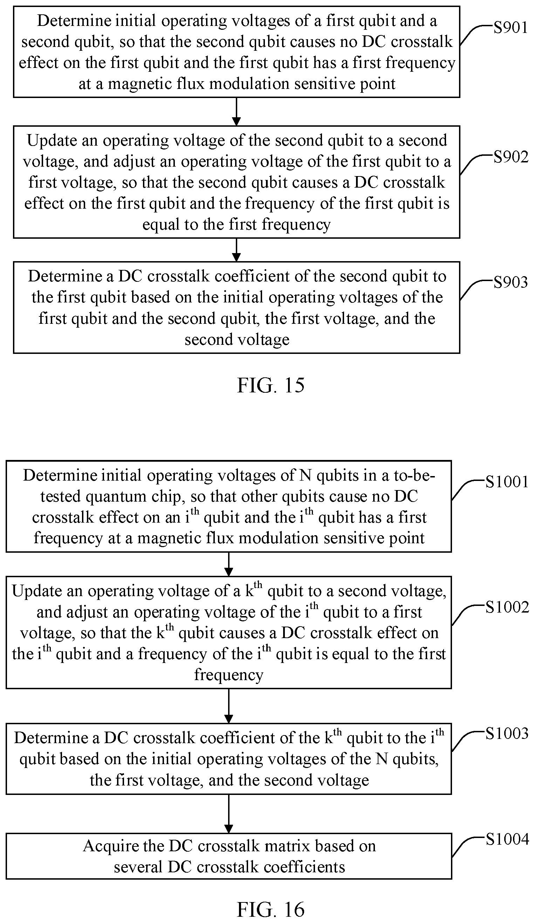

The above inventive concept will be described in detail below with reference to specific embodiments. Referring to FIG. 15, FIG. 15 is a flowchart of another method for acquiring a DC crosstalk coefficient between qubits according to some embodiments of the present disclosure. This embodiment provides a method for acquiring a DC crosstalk coefficient between qubits, including the following steps.

In S901, initial operating voltages of a first qubit and a second qubit are determined, so that the second qubit causes no DC crosstalk effect on the first qubit and the first qubit has a first frequency at a magnetic flux modulation sensitive point.

In S902, the operating voltage of the second qubit is updated to a fifth voltage, and the operating voltage of the first qubit is adjusted to a fourth voltage, so that the second qubit causes a DC crosstalk effect on the first qubit and a frequency of the first qubit is equal to the first frequency.

In S903, a DC crosstalk coefficient of the second qubit to the first qubit is determined based on the initial operating voltages of the first qubit and the second qubit, the fourth voltage, and the fifth voltage.

According to the method for determining DC crosstalk proposed in some embodiments of the present disclosure, a DC crosstalk coefficient between two qubits can be quickly acquired, and efficiency of a quantum chip testing process is effectively improved.

According to the foregoing description, a 2*2 DC crosstalk matrix exists between two qubits. In the DC crosstalk matrix, a first row is $[C_{11}, C_{12}]$, a second row is $[C_{21}, C_{22}]$, and $C_{11}$ and $C_{22}$ are 1. An initial voltage of the first qubit and an initial voltage of the second qubit form a voltage combination. The voltage combination is set as a first column matrix, in which case the first column matrix is $[V_{01}, V_{02}]^T$. The fourth voltage and the fifth voltage form another voltage combination which is set as a second column matrix. In this case, the second column matrix is $[V_1, V_2]^T$. According to the foregoing steps, the voltage of the first qubit is adjusted to the fifth voltage, so that the frequency of the first qubit returns to the frequency at the initial operating frequency. Therefore, in fact, for the first qubit, effective voltages applied to the first qubit after the two voltage combinations are subjected to the DC crosstalk matrix are equal. That is, there are equations: $[1, C_{12}] [V_{01}, V_{02}]^T = [1, C_{12}] [V_1, V_2]^T$. Through the equation, the DC crosstalk coefficient of the second qubit to the first qubit can be easily obtained by simply acquiring the initial operating voltage of the two qubits, the fourth voltage, and the fifth voltage. Therefore, the DC crosstalk coefficient of the qubit can be quickly and accurately obtained by using the technical solution of the present disclosure.

Specifically, the determining a DC crosstalk coefficient of the second qubit to the first qubit based on the initial operating voltages of the first qubit and the second qubit, the fourth voltage, and the fifth voltage includes:

acquiring a first column matrix based on the initial operating voltage of the first qubit and the initial operating voltage of the second qubit;

acquiring a second column matrix based on the fourth voltage and the fifth voltage; and

determining the crosstalk coefficient of the second qubit to the first qubit based on the first column matrix and the second column matrix.

In some embodiments, the first column matrix is $[V_{01}, V_{02}]^T$, the second column matrix is $[V_1, V_2]^T$, and the crosstalk coefficient of the second qubit to the first qubit has the following relationship with the first column matrix and the second column matrix:

$$[1, C_{12}] [V_{01}, V_{02}]^T = [1, C_{12}] [V_1, V_2]^T; \qquad (7)$$

$C_{12}$ denotes the crosstalk coefficient of the second qubit to the first qubit, $V_{01}$ denotes the initial operating voltage of the first qubit, $V_{02}$ denotes the initial operating voltage of the second qubit, $V_1$ denotes the fourth voltage after the first qubit is updated, and $V_2$ denotes the fifth voltage after the second qubit is adjusted.

Specifically, the adjusting an operating voltage of the first qubit to a fourth voltage includes:

setting the operating voltage of the first qubit to a third voltage, and acquiring the frequency of the first qubit in this case as a second frequency, where in this embodiment, the second frequency is acquired through a Ramsey experiment;

acquiring the fourth voltage corresponding to the second frequency based on a first DC modulation spectrum, where the first DC modulation spectrum is a DC modulation spectrum measured when there is no DC crosstalk effect on the first qubit, and the DC modulation spectrum is used to characterize a variation of the frequency of a qubit as a function of the DC voltage, with the DC value on the ordinate and the frequency value of the qubit on the abscissa; and acquiring the fourth voltage according to the following formula: $V_1 = V_{01} + V_3 - V_4$; where $V_{01}$ denotes the initial operating voltage of the first qubit, $V_1$ denotes the fourth voltage, $V_3$ denotes the third voltage, and $V_4$ denotes the fourth voltage.

Some other embodiments of the present disclosure provide a method for acquiring a DC crosstalk matrix. The DC crosstalk matrix includes DC crosstalk coefficients between several qubits in a to-be-tested quantum chip. The DC crosstalk coefficients are determined with the method for acquiring a DC crosstalk coefficient in any one of the above feature descriptions.

Some other embodiments of the present disclosure provide a method for acquiring a DC crosstalk matrix. Referring to FIG. 16, FIG. 16 is a flowchart of another method for acquiring a DC crosstalk matrix between qubits according to some embodiments of the present disclosure. The method includes the following steps.

In S1001, initial operating voltages of N qubits in a to-be-tested quantum chip are determined, so that other qubits cause no DC crosstalk effect on an $i^{th}$ qubit and the $i^{th}$ qubit has a first frequency at a magnetic flux modulation sensitive point.

In S1002, an operating voltage of a $k^{th}$ qubit is updated to a fifth voltage, and an operating voltage of the $i^{th}$ qubit is adjusted to a fourth voltage, so that the $k^{th}$ qubit causes a DC crosstalk effect on the $i^{th}$ qubit and a frequency of the $i^{th}$ qubit is equal to the first frequency.

In S1003, a DC crosstalk coefficient of the $k^{th}$ qubit to the $i^{th}$ qubit is determined based on the initial operating voltages of the N qubits, the fourth voltage, and the fifth voltage.

In S1004, the DC crosstalk matrix is acquired based on several DC crosstalk coefficients.

According to the solution of the present disclosure, DC crosstalk coefficients between the qubits in the quantum chip can be quickly acquired, and efficiency of a quantum chip testing process is effectively improved.

Assuming that there are N bits in the quantum chip, the DC crosstalk matrix corresponding to the quantum chip is an N*N matrix, and diagonal values of the N*N matrix are all 1. Therefore, N*(N-1) elements in the crosstalk matrix are required to be determined, and each row has N-1 elements required to be determined. Assuming that (N-1) matrix elements in an $i^{th}$ row are to be determined now, only N-1 linearly independent equations are required to be solved. A specific solution is as follows.

An operating point (i.e., an operating voltage) of the $i^{th}$ qubit (i.e., a target qubit) is adjusted to deviate from a degenerate point (a point where the qubit frequency is insensitive to magnetic flux modulation) so that the target qubit is at a magnetic flux modulation sensitive point (for example, the operating voltage of the $i^{th}$ qubit may be set to a voltage corresponding to a position 50 MHz from the degenerate point), and voltages of other qubits are all at points where there is no crosstalk effect or very little crosstalk effect on the target qubit. Assuming that an initial voltage combination in this case is $[V_1, V_2... V_N]^T$, a frequency $f_i$ of the $i^{th}$ qubit in this case is accurately recorded, and then a voltage of the $k^{th}$ qubit ($k \neq i$) is changed in sequence. Due to the existence of DC crosstalk, the frequency of the target qubit i is changed, which is assumed to be $f_{i\_offset}$. Each time the $k^{th}$ qubit is changed, an automatic calibration process is started to adjust the voltage of the target qubit i until the frequency of the target qubit i returns to $f_i$. It is assumed that the voltage of the target qubit in this case is $V_{i\_offset}$. According to the previous description of the DC crosstalk coefficient acquisition scheme, since the effective voltages applied to the target qubit i after the N sets of voltages are subjected to the DC crosstalk matrix are all equal, N-1 linearly independent equations are obtained.

The crosstalk coefficient is defined as $C_{mn}$ which represents a crosstalk coefficient of an $n^{th}$ qubit to an $m^{th}$ qubit. The $i^{th}$ row of the crosstalk matrix includes $[C_{i1}, C_{i2}... C_{iN}]$, where $C_{ii}=1$. Each time the $k^{th}$ qubit ($k \neq i$) is changed, a set of changing values of the operating voltage of the target qubit i and the $k^{th}$ qubit may be obtained. An updated column matrix is obtained by updating this set of changing values to the initial voltage combination. Since the effective voltages applied to the target qubit i after the N sets of voltages are subjected to the crosstalk matrix are all equal,

[00285] $[C_{i1}, C_{i2}...C_{iN}]* [V_1, V_2...V_N]^T=[C_{i1}, C_{i2}...C_{iN}]*$updated column matrix.

updated column matrix.

Through the above formula, after voltages of N-1 qubits except the target qubit i are changed, N-1 linearly independent equations may be obtained. N-1 crosstalk coefficients in the $i^{th}$ row can be obtained through the equations. For all qubits in the quantum chip, the entire crosstalk matrix can be obtained in sequence according to the above method. Specifically, the acquiring the DC crosstalk matrix based on several DC crosstalk coefficients includes:

S1101: determining whether DC crosstalk coefficients of all other qubits except the $i^{th}$ qubit to the $i^{th}$ qubit have been acquired;
S1102: if not, re-selecting the $k^{th}$ qubit, and going back to perform the updating an operating voltage of a $k^{th}$ qubit to a fifth voltage, and adjusting an operating voltage of the $i^{th}$ qubit to a fourth voltage, so that the $k^{th}$ qubit causes a DC crosstalk effect on the $i^{th}$ qubit and a frequency of the $i^{th}$ qubit is equal to the first frequency;
S1103: if yes, determining whether DC crosstalk coefficients between the N qubits have all been acquired;
S1104: if not, re-selecting the $i^{th}$ qubit, and going back to perform the determining initial operating voltages of N qubits in a to-be-tested quantum chip , so that other qubits cause no DC crosstalk effect on an $i^{th}$ qubit and the $i^{th}$ qubit has a first frequency at a magnetic flux modulation sensitive point; and
S1105: if yes, acquiring the DC crosstalk matrix based on several obtained DC crosstalk coefficients.

In some embodiments, in order to quickly and accurately calibrate the operating voltage of the $i^{th}$ qubit to a voltage value corresponding to the first frequency after DC crosstalk occurs, in the method for acquiring a DC crosstalk matrix, the adjusting an operating voltage of the $i^{th}$ qubit to a fourth voltage includes:

setting the $i^{th}$ qubit to a third voltage, and acquiring a frequency of the $i^{th}$ qubit in this case as a first frequency;
acquiring the corresponding fourth voltage from a first DC modulation spectrum based on the first frequency, where the first DC modulation spectrum is a DC modulation spectrum measured when there is no DC crosstalk effect on the $i^{th}$ qubit; and
acquiring the fourth voltage according to the following formula: $V_1=V_{01}+V_3-V_4$; where $V_{01}$ denotes the initial operating voltage of the $i^{th}$ qubit, $V_2$ denotes the fifth voltage, $V_3$ denotes the third voltage, and $V_4$ denotes the fourth voltage.

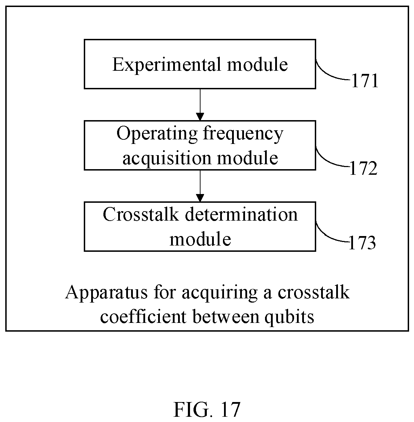

Some other embodiments of the present disclosure provide an apparatus for determining crosstalk of qubits. The apparatus for determining crosstalk of qubits is in one-to-one correspondence with the method for determining crosstalk of qubits in the above embodiments. Referring to FIG. 17, FIG. 17 is a schematic diagram of an apparatus for determining crosstalk of qubits according to some embodiments of the present disclosure. As shown in FIG. 17, the apparatus for determining crosstalk of qubits includes an experimental module, an operating frequency acquisition module, and a crosstalk determination module. Detailed descriptions of the functional modules are as follows.

The experimental module 171 is configured to perform a Ramsey experiment on a first qubit, where between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit.

The operating frequency acquisition module 172 is configured to acquire a target operating frequency of the first qubit based on the Ramsey experiment, and determine a voltage of the first electrical signal corresponding to the target operating frequency as a third voltage.

The crosstalk determination module 173 is configured to determine a crosstalk coefficient of the second qubit to the first qubit based on the second voltage and the third voltage.

Specific limitations on the apparatus for determining crosstalk of qubits may be obtained with reference to the limitations on the method for determining crosstalk of qubits hereinabove. Details are not described herein again. Each module in the apparatus for determining crosstalk of qubits may be entirely or partially implemented by using software, hardware, or a combination thereof. The above modules may be built in or independent of a processor of a computer device in a hardware form, or may be stored in a memory of the computer device in a software form, so that the processor invokes and performs an operation corresponding to each of the above modules.

Some other embodiments of the present disclosure provide an apparatus for acquiring an AC crosstalk matrix of a quantum chip. The apparatus for acquiring an AC crosstalk matrix of a quantum chip is in one-to-one correspondence with the method for acquiring an AC crosstalk matrix of a quantum chip in Embodiment 3 above. The apparatus for acquiring an AC crosstalk matrix of a quantum chip includes a first module, a second module, a third module, a fourth module, a fifth module, and a sixth module. Detailed descriptions of the functional modules are as follows.

The first module 181 is configured to set, in a to-be-tested quantum chip, one qubit as a first qubit, and another qubit as a second qubit.

The second module 182 is configured to perform a Ramsey experiment on the first qubit, where between two X/2 quantum logic gates in the Ramsey experiment, a first AC signal with an amplitude of a first voltage is applied to the first qubit so that the first qubit is at a magnetic flux modulation sensitive point, and a second AC signal with an amplitude of a second voltage is applied to a second qubit so that the second AC signal causes a crosstalk effect on the first qubit.

The third module 183 is configured to acquire a target operating frequency of the first qubit based on the Ramsey experiment.

The fourth module 184 is configured to acquire a voltage corresponding to the target operating frequency as a third voltage based on a pre-acquired AC modulation spectrum of the first qubit.

The fifth module 185 is configured to determine an AC crosstalk coefficient of the second qubit to the first qubit based on the second voltage and the third voltage.

The sixth module 186 is configured to determing whether AC crosstalk coefficients between all the qubits in a to-be-tested superconducting quantum chip have been acquired; if yes, generate an AC crosstalk matrix of the to-be-tested superconducting quantum chip based on the AC crosstalk coefficients; and if not, re-select the first qubit and/or the second qubit, and go back to perform the performing a Ramsey experiment on the first qubit.

Specific limitations on the apparatus for acquiring an AC crosstalk matrix of a quantum chip may be obtained with reference to the limitations on the method for acquiring an AC crosstalk matrix of a quantum chip hereinabove. Details are not described herein again. Each module in the apparatus for acquiring an AC crosstalk matrix of a quantum chip may be entirely or partially implemented by using software, hardware, or a combination thereof. The above modules may be built in or independent of a processor of a computer device in a hardware form, or may be stored in a memory of the computer device in a software form, so that the processor invokes and performs an operation corresponding to each of the above modules.

Some other embodiments of the present disclosure further provide an apparatus for acquiring a DC crosstalk matrix, including:

a seventh module configured to determine initial operating voltages of N qubits in a to-be-tested quantum chip, so that other qubits cause no DC crosstalk effect on an $i^{th}$ qubit and the $i^{th}$ qubit has a first frequency at a magnetic flux modulation sensitive point;
an eighth module configured to update an operating voltage of a $k^{th}$ qubit to a second voltage, and adjust an operating voltage of the $i^{th}$ qubit to a first voltage, so that the $k^{th}$ qubit causes a DC crosstalk effect on the $i^{th}$ qubit and a frequency of the $i^{th}$ qubit is equal to the first frequency;
a ninth module configured to determine a DC crosstalk coefficient of the $k^{th}$ qubit to the $i^{th}$ qubit based on the initial operating voltages of the N qubits, the first voltage, and the second voltage; and
a tenth module configured to acquire the DC crosstalk matrix based on several DC crosstalk coefficients.

It may be understood that the seventh module, the eighth module, the ninth module, and the tenth module may be combined and implemented in one apparatus, or any one of the module may be split into a plurality of sub-modules, or at least part of functions of one or more of the seventh module, the eighth module, the ninth module, and the tenth module may be combined with at least part of functions of other modules and implemented in one functional module. According to some embodiments of the present disclosure, at least one of the seventh module, the eighth module, the ninth module, and the tenth module may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by hardware or firmware in any other reasonable manner that integrates or encapsulates the circuit, or may be implemented by any one of the three implementation manners of software, hardware, and firmware or an appropriate combination thereof. Alternatively, at least one of the seventh module, the eighth module, the ninth module, and the tenth module may be implemented at least partially as a computer program module that, when executed, may perform the corresponding functions.

Some other embodiments of the present disclosure further provide a quantum control system. The system includes the apparatus for determining crosstalk of qubits, or the apparatus for acquiring an AC crosstalk matrix of a quantum chip, or the apparatus for acquiring a DC crosstalk matrix of a quantum chip as described in the above embodiments.

Some other embodiments of the present disclosure further provide a quantum computer, including the quantum control system in the above embodiments.

Some other embodiments of the present disclosure further provide a computer-readable storage medium, storing a computer program, wherein, when the computer program is executed by a processor, the method can be implemented.

In the description of the present disclosure, the terms "first" and "second" are used for descriptive purposes only, which cannot be construed as indicating or implying relative importance, or implicitly specifying the number of the indicated technical features. Thus, the features defined with "first" and "second" may explicitly or implicitly include one or more features. In the description of the present disclosure, "a plurality of" means at least two, such as two or three, unless specifically stated otherwise.

In addition, the description with reference to the terms "an embodiment," "some embodiments," "example," "a specific example," or the like means that a particular feature, structure, material, or characteristic described in connection with the embodiment or example is included in at least one embodiment or example of the present disclosure. In this specification, schematic expressions of the above terms are not necessarily referring to the same embodiment or example of the present disclosure. Furthermore, the particular features, structures, materials, or characteristics described may be combined in any suitable manner in one or more embodiments or examples. In addition, those skilled in the art may join and combine different embodiments or examples described in this specification.

The above are only optional embodiments of the present disclosure and do not limit the present disclosure in any way. Any variations such as equivalent replacements or modifications made to the technical solution and the technical content disclosed in the present disclosure by any person skilled in the art without departing the scope of the technical solution of the present disclosure all do not depart the content of the technical solution of the present disclosure and still fall within the protection scope of the present disclosure.

**Claims**

1. A method for determining crosstalk of qubits, comprising:

    performing a Ramsey experiment on a first qubit, wherein, between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit;
    acquiring a target operating frequency of the first qubit based on the Ramsey experiment, and determining a voltage of the first electrical signal corresponding to the target operating frequency as a third voltage; and
    determining a crosstalk coefficient of the second qubit to the first qubit based on the second voltage and the third voltage.

2. The method according to claim 1, wherein the first electrical signal is a first alternating current, AC, signal, and the second electrical signal is a second AC signal,
    the acquiring a target operating frequency of the first qubit based on the Ramsey experiment, and determining a voltage of the first electrical signal corresponding to the target operating frequency as a third voltage comprises:

    acquiring the target operating frequency of the first qubit based on the Ramsey experiment, and acquiring the voltage corresponding to the target operating frequency as the third voltage based on a pre-acquired AC modulation spectrum of the first qubit, and
    the determining a crosstalk coefficient of the second qubit to the first qubit based on the second voltage and the third voltage comprises:
    determining an AC crosstalk coefficient of the second qubit to the first qubit based on the second voltage and the third voltage.

3. The method according to claim 2, wherein both the first AC signal and the second AC signal are square-wave signals, and pulse widths of the first AC signal and the second AC signal are equal.

4. The method according to claim 2, wherein the applying a first electrical signal with an amplitude of a first voltage to the first qubit so that the first qubit is at a magnetic flux modulation sensitive point comprises:

determining a degenerate operating point of the first qubit according to the AC modulation spectrum;
determining, according to the degenerate operating point and a preset frequency deviation, a magnetic flux modulation sensitive point associated with the degenerate operating point; and
determining the first voltage according to the magnetic flux modulation sensitive point, and setting amplitude of the first AC signal to the first voltage.

5. The method according to claim 2, wherein the determining a crosstalk coefficient of the second qubit to the first qubit based on the second voltage and the third voltage comprises:

acquiring a set of first data, the first data comprising the first voltage, the second voltage, and the third voltage;
determining whether a number of sets of the first data satisfies a preset condition;
if yes, linearly fitting a relationship between the second voltage and the third voltage based on all of the first data to determine the AC crosstalk coefficient of the second qubit to the first qubit; and
if not, resetting the magnitude of the second voltage, and going back to perform the step of performing a Ramsey experiment on the first qubit.

6. The method according to claim 5, wherein the preset condition comprises presetting a number of times of performing of the Ramsey experiment.

7. The method according to claim 5, wherein the linearly fitting a relationship between the second voltage and the third voltage based on all of the first data, to determine the AC crosstalk coefficient of the second qubit to the first qubit comprises:

calculating, for each set of the first data, a variation of the third voltage relative to the first voltage, and acquiring a coefficient of a linear relationship between the variation and the second voltage; and
acquiring an average value of all the coefficients, and taking the average value of the coefficients as the AC crosstalk coefficient of the second qubit to the first qubit.

8. The method according to claim 5, wherein the resetting the magnitude of the second voltage comprises:

increasing or decreasing the second voltage within a preset range according to a preset step size.

9. The method according to claim 1, wherein the first electrical signal is a first direct current, DC, signal, and the second electrical signal is a second DC signal,

the acquiring a target operating frequency of the first qubit based on the Ramsey experiment, and determining a voltage of the first electrical signal corresponding to the target operating frequency as a third voltage comprises:
acquiring the target operating frequency of the first qubit based on the Ramsey experiment, and obtaining the voltage corresponding to the target operating frequency based on an energy spectrum curve of the first qubit as the third voltage, wherein the energy spectrum curve is a variation curve of frequencies of the qubit with voltages, and
the determining a crosstalk coefficient of the second qubit to the first qubit based on the second voltage and the third voltage comprises:determining a DC crosstalk coefficient of the second qubit to the first qubit based on the second voltage and the third voltage.

10. The method according to claim 9, wherein the applying a first electrical signal with an amplitude of a first voltage to the first qubit so that the first qubit is at a magnetic flux modulation sensitive point specifically comprises:

determining a first operating point of the first qubit, wherein the first operating point is an operating point near the magnetic flux modulation sensitive point of the first qubit; and
determining a voltage corresponding to the first operating point as the first voltage and applying the first voltage to the first qubit, and adjusting the first voltage so that a frequency of the first qubit is equal to a first frequency corresponding to the magnetic flux modulation sensitive point.

11. The method according to claim 10, wherein the determining a first operating point of the first qubit specifically comprises:

determining a degenerate operating point of the first qubit according to the energy spectrum curve of the first qubit;
determining the magnetic flux modulation sensitive point according to the degenerate operating point and a preset frequency deviation; and
determining the first operating point according to the magnetic flux modulation sensitive point.

12. The method according to claim 9, wherein the energy spectrum curve is an energy spectrum curve after the frequency of the first qubit is affected by the second voltage.

13. The method according to claim 9, wherein, prior to the determining a DC crosstalk coefficient of the second qubit to the first qubit based on the second voltage and the third voltage, the method further comprises:

adjusting the second voltage; and
going back to perform the step of acquiring the target operating frequency of the first qubit based on the Ramsey experiment, and obtaining the voltage corresponding to the target operating frequency based on an energy spectrum curve of the first qubit as the third voltage.

14. The method according to claim 13, wherein, prior to the determining a DC crosstalk coefficient of the second qubit to the first qubit based on the second voltage and the third voltage, the method further comprises:

determining the second voltage and the third voltage as a set of to-be-processed data, and updating a to-be-processed database;
determining a data volume threshold of the to-be-processed data as Z, determining a total number of the to-be-processed data currently in the to-be-processed data database as M, and determining whether M is greater than or equal to Z;
if yes, performing the step of determining a DC crosstalk coefficient of the second qubit to the first qubit based on the second voltage and the third voltage; and
if not, going back to perform the step of regulating the second voltage.

15. The method according to claim 14, wherein the determining a DC crosstalk coefficient of the second qubit to the first qubit based on the second voltage and the third voltage specifically comprises:

linearly fitting the second voltage and the corresponding third voltage according to the M sets of to-be-processed data; and
obtaining a slope of a linear relationship between the second voltage and the third voltage, and denoting the slope as the DC crosstalk coefficient of the second qubit to the first qubit.

16. An apparatus for determining crosstalk of qubits, comprising:

an experimental module configured to perform a Ramsey experiment on a first qubit, wherein, between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit;
an operating frequency acquisition module configured to acquire a target operating frequency of the first qubit based on the Ramsey experiment, and determine a voltage of the first electrical signal corresponding to the target operating frequency as a third voltage; and
a crosstalk determination module configured to determine a crosstalk coefficient of the second qubit to the first qubit based on the second voltage and the third voltage.

17. A quantum control system, comprising the apparatus for determining crosstalk of qubits according to claim 16.

18. A quantum computer, comprising the quantum control system according to claim 17.

**19.** A computer-readable storage medium, storing a computer program, wherein, when the computer program is executed by a processor, the method for determining crosstalk of qubits according to any one of claims 1 to 15 is implemented.

FIG. 1

Perform a Ramsey experiment on a first qubit, where between two X/2 quantum logic gates in the Ramsey experiment, a first electrical signal with an amplitude of a first voltage is applied to the first qubit so that the first qubit is at a magnetic flux modulation sensitive point, and a second electrical signal with an amplitude of a second voltage is applied to a second qubit so that the second electrical signal causes a crosstalk effect on the first qubit /⎯S102

Acquire a target operating frequency of the first qubit based on the Ramsey experiment, and determine a voltage of the first electrical signal corresponding to the target operating frequency as a third voltage /⎯S104

Determine a crosstalk coefficient of the second qubit to the first qubit based on the second voltage and the third voltage /⎯S106

FIG. 2

Target qubit: 

Bias qubit:

FIG. 3

FIG. 4

| Re-select several operating voltages, and acquire corresponding predicted qubit frequencies using the frequency prediction formula | S201 |

| Acquire a frequency prediction formula based on the operating voltage of the to-be-tested qubit operating at the degenerate point, the several operating voltages near the degenerate point, and the corresponding qubit frequencies | S202 |

| Acquire, based on the Ramsey experiment, corresponding qubit frequencies when a to-be-tested qubit operates at a degenerate point and several operating voltages near the degenerate point | S203 |

| Acquire an AC modulation spectrum based on the operating voltages of the to-be-tested qubit and the corresponding qubit frequencies or predicted qubit frequencies | S204 |

FIG. 5

Set, in a to-be-tested quantum chip, one qubit as a first qubit, and another qubit as a second qubit — S401

Perform a Ramsey experiment on the first qubit, where between two X/2 quantum logic gates in the Ramsey experiment, a first AC signal with an amplitude of a first voltage is applied to the first qubit so that the first qubit is at a magnetic flux modulation sensitive point, and a second AC signal with an amplitude of a second voltage is applied to a second qubit so that the second AC signal causes a crosstalk effect on the first qubit — S402

Acquire a target operating frequency of the first qubit based on the Ramsey experiment — S403

Acquire a voltage of the first AC signal corresponding to the target operating frequency as a third voltage based on a pre-acquired AC modulation spectrum of the first qubit — S404

Determine an AC crosstalk coefficient of the second qubit to the first qubit based on the second voltage and the third voltage — S405

Determine whether AC crosstalk coefficients between all the qubits in the to-be-tested superconducting quantum chip have been acquired; if yes, generate an AC crosstalk matrix of the to-be-tested superconducting quantum chip based on the AC crosstalk coefficients; and if not, re-select the first qubit and/ or the second qubit, and go back to perform the performing a Ramsey experiment on the first qubit — S406

FIG. 6

Perform a Ramsey experiment on the first qubit, between two X/2 quantum logic gates in the Ramsey experiment, a first DC signal with an amplitude of a first voltage is applied to the first qubit so that the first qubit is at a magnetic flux modulation sensitive point, and a second DC signal with an amplitude of a second voltage is applied to a second qubit so that the second DC signal causes a crosstalk effect on the first qubit

S501

Acquire the target operating frequency of the first qubit based on the Ramsey experiment, and obtain the voltage corresponding to the target operating frequency based on an energy spectrum of the first qubit as the third voltage, where the energy spectrum is a curve of the frequency of the qubit as a function of the voltage

S502

Determine a DC crosstalk coefficient of the second qubit to the first qubit based on the second voltage and the third voltage

S503

FIG. 7

FIG. 8

Determine a first operating point of the first qubit, where the first operating point is an operating point near the magnetic flux modulation sensitive point of the first qubit  ⟋⎯S5011

Determine a voltage corresponding to the first operating point as the first voltage and apply the first voltage to the first qubit, and adjust the first voltage so that a frequency of the first qubit is equal to a first frequency corresponding to the magnetic flux modulation sensitive point  ⟋⎯S5012

FIG. 9

Determine a degenerate operating point of the first qubit according to the energy spectrum of the first qubit  ⟋⎯S50111

Determine the magnetic flux modulation sensitive point according to the degenerate operating point and a preset frequency deviation  ⟋⎯S50112

Determine the first operating point according to the magnetic flux modulation sensitive point  ⟋⎯S50113

FIG. 10

Adjust the second voltage — S601

Go back to perform the step of acquiring the target operating frequency of the first qubit based on the Ramsey experiment, and obtaining the voltage corresponding to the target operating frequency based on an energy spectrum of the first qubit as the third voltage, that is, perform step S502 — S602

Determine the second voltage and the third voltage as a set of to-be-processed data, and update a to-be-processed database — S603

No

Determine a data volume threshold of the to-be-processed data as Z, determine a total number of the to-be-processed data currently in the to-be-processed data database as M, and determine whether M is greater than or equal to Z — S604

Yes

Perform the step of acquiring a DC crosstalk coefficient of the second qubit to the first qubit based on the second voltage and the third voltage, that is, perform step S503 — S503

FIG. 11

Linearly fit the second voltages and the corresponding third voltages according to the M sets of to-be-processed data ⟋ ─S701

Obtain a slope of a linear relationship between the second voltage and the third voltage, and taken the slope as the DC crosstalk coefficient of the second qubit to the first qubit ⟋ ─S702

FIG. 12

FIG. 13

Determine an ith qubit among N qubits on a quantum chip as a first qubit, and apply a first voltage to the first qubit, so that the first qubit has a first frequency at a magnetic flux modulation sensitive point, where N is an integer greater than or equal to 2 — S801

Determine a kth qubit among the N qubits on the quantum chip as a second qubit, and apply a second voltage to the second qubit, so that the second qubit generates DC crosstalk to the first qubit, affecting the first frequency, where i≠k — S802

Obtain an operating frequency of the first qubit based on the Ramsey experiment, and obtain a third voltage corresponding to the operating frequency based on an energy spectrum of the first qubit, where the operating frequency is the frequency after the first frequency of the first qubit is affected by the second voltage, and the energy spectrum is a curve of the frequency of the qubit as a function of the voltage — S803

Acquire a DC crosstalk coefficient of the second qubit to the first qubit based on the second voltage and the third voltage — S804

Determine whether DC crosstalk coefficients of all other qubits on the quantum chip except the ith qubit to the ith qubit have been acquired — S805

No

Yes

Determine whether DC crosstalk coefficients between N qubits have all been acquired — S806

No

Yes

Generate a DC crosstalk matrix based on all the acquired DC crosstalk coefficients — S807

FIG. 14

Determine initial operating voltages of a first qubit and a second qubit, so that the second qubit causes no DC crosstalk effect on the first qubit and the first qubit has a first frequency at a magnetic flux modulation sensitive point ⟋─S901

Update an operating voltage of the second qubit to a second voltage, and adjust an operating voltage of the first qubit to a first voltage, so that the second qubit causes a DC crosstalk effect on the first qubit and the frequency of the first qubit is equal to the first frequency ⟋─S902

Determine a DC crosstalk coefficient of the second qubit to the first qubit based on the initial operating voltages of the first qubit and the second qubit, the first voltage, and the second voltage ⟋─S903

FIG. 15

Determine initial operating voltages of N qubits in a to-be-tested quantum chip, so that other qubits cause no DC crosstalk effect on an $i^{th}$ qubit and the $i^{th}$ qubit has a first frequency at a magnetic flux modulation sensitive point ⟋─S1001

Update an operating voltage of a $k^{th}$ qubit to a second voltage, and adjust an operating voltage of the $i^{th}$ qubit to a first voltage, so that the $k^{th}$ qubit causes a DC crosstalk effect on the $i^{th}$ qubit and a frequency of the $i^{th}$ qubit is equal to the first frequency ⟋─S1002

Determine a DC crosstalk coefficient of the $k^{th}$ qubit to the $i^{th}$ qubit based on the initial operating voltages of the N qubits, the first voltage, and the second voltage ⟋─S1003

Acquire the DC crosstalk matrix based on several DC crosstalk coefficients ⟋─S1004

FIG. 16

```
┌─────────────────────────────────────────────────┐
│                                                   │
│     ┌──────────────────────────┐                 │
│     │   Experimental module    │╲                │
│     └──────────────────────────┘ ╲──171          │
│                   │                               │
│                   ▼                               │
│     ┌──────────────────────────┐                 │
│     │    Operating frequency   │╲                │
│     │    acquisition module    │ ╲──172          │
│     └──────────────────────────┘                 │
│                   │                               │
│                   ▼                               │
│     ┌──────────────────────────┐                 │
│     │  Crosstalk determination │╲                │
│     │         module           │ ╲──173          │
│     └──────────────────────────┘                 │
│                                                   │
│      Apparatus for acquiring a crosstalk          │
│         coefficient between qubits                │
└─────────────────────────────────────────────────┘
```

FIG. 17

## INTERNATIONAL SEARCH REPORT

| International application No. |
|---|
| **PCT/CN2022/108248** |

| A. | CLASSIFICATION OF SUBJECT MATTER |
|---|---|

G01R 31/3185(2006.01)i; G01R 31/28(2006.01)i

According to International Patent Classification (IPC) or to both national classification and IPC

| B. | FIELDS SEARCHED |
|---|---|

Minimum documentation searched (classification system followed by classification symbols)

G01R

Documentation searched other than minimum documentation to the extent that such documents are included in the fields searched

Electronic data base consulted during the international search (name of data base and, where practicable, search terms used)

CNPAT, CNKI, WPI, EPODOC: 量子, 比特, 芯片, 串扰, 干扰, 磁通, 调制, AC, 电压, 频率, 脉冲, 拟合, 参数, 系数, nois+, coupl+, quantum, crosstalk, disturb+, bit?, ramsey, fit+, match+, parameter

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112444738 A (ORIGIN QUANTUM COMPUTING TECHNOLOGY CO., LTD.) 05 March 2021 (2021-03-05) <br> description, paragraphs [0068]-[0141], and figures 1-8 | 1-19 |
| A | CN 111722084 A (JINAN INSPUR HI-TECH INVESTMENT AND DEVELOPMENT CO., LTD.) 29 September 2020 (2020-09-29) <br> entire document | 1-19 |
| A | CN 110472740 A (BEIJING BAIDU NETCOM SCIENCE AND TECHNOLOGY CO., LTD.) 19 November 2019 (2019-11-19) <br> entire document | 1-19 |
| A | CN 112331693 A (SHENZHEN FUTIAN SUSTECH INSTITUTE FOR QUANTUM TECHNOLOGY AND ENGINEERING et al.) 05 February 2021 (2021-02-05) <br> entire document | 1-19 |
| A | US 10452991 B1 (INTERNATIONAL BUSINESS MACHINES CORP.) 22 October 2019 (2019-10-22) <br> entire document | 1-19 |
| A | US 2018260732 A1 (RIGETTI & CO, INC.) 13 September 2018 (2018-09-13) <br> entire document | 1-19 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 September 2022** | **10 October 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108248**

| Patent document cited in search report | | | Publication date (day/month/year) | Patent family member(s) | | | Publication date (day/month/year) |
|---|---|---|---|---|---|---|---|
| CN | 112444738 | A | 05 March 2021 | None | | | |
| CN | 111722084 | A | 29 September 2020 | None | | | |
| CN | 110472740 | A | 19 November 2019 | None | | | |
| CN | 112331693 | A | 05 February 2021 | None | | | |
| US | 10452991 | B1 | 22 October 2019 | None | | | |
| US | 2018260732 | A1 | 13 September 2018 | US | 2022092461 | A1 | 24 March 2022 |
| | | | | AU | 2018230440 | A1 | 24 October 2019 |
| | | | | EP | 3593298 | A1 | 15 January 2020 |
| | | | | US | 2021056454 | A1 | 25 February 2021 |
| | | | | WO | 2018165500 | A1 | 13 September 2018 |
| | | | | US | 2020050958 | A1 | 13 February 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110855588
- CN 202110855366
- CN 202111149538
- CN 202110855269